(19) Europäisches Patentamt
European Patent Office
Office européen des brevets

(11) **EP 3 034 518 B1**

(12) **EUROPÄISCHE PATENTSCHRIFT**

(45) Veröffentlichungstag und Bekanntmachung des Hinweises auf die Patenterteilung:
**24.05.2017 Patentblatt 2017/21**

(51) Int Cl.:
*C08C 1/14* (2006.01)          *C08C 1/15* (2006.01)
*C08F 236/12* (2006.01)       *C08F 6/22* (2006.01)
*C08L 9/04* (2006.01)

(21) Anmeldenummer: **14290399.6**

(22) Anmeldetag: **19.12.2014**

(54) **Farbstabile Nitrilkautschuke**

Color stable nitrile rubbers

Caoutchouc de nitrile à couleur stabilisée

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.06.2016 Patentblatt 2016/25**

(73) Patentinhaber: **ARLANXEO Deutschland GmbH**
**41540 Dormagen (DE)**

(72) Erfinder:
• **Brandau, Sven**
**67000 Strasbourg (FR)**

• **Kaiser, Andreas**
**67000 Strasbourg (FR)**

(74) Vertreter: **Wichmann, Birgid et al**
**LANXESS Deutschland GmbH**
**LEX-IPR**
**Kennedyplatz 1**
**50569 Köln (DE)**

(56) Entgegenhaltungen:
**EP-A1- 2 177 547        WO-A1-2007/049651**
**US-A- 3 790 646        US-A- 4 383 108**
**US-A1- 2008 293 868   US-A1- 2008 293 889**

**Beschreibung**

Die Erfindung betrifft einen neuen aluminiumhaltigen Nitrilkautschuk, ein Verfahren zu dessen Herstellung, vulkanisierbare Mischungen auf Basis dieses Nitrilkautschuks, ferner ein Verfahren zur Herstellung von Vulkanisaten aus diesen Mischungen sowie die dabei erhaltenen Vulkanisate.

Unter Nitrilkautschuken, abgekürzt auch als "NBR" bezeichnet, werden Kautschuke verstanden, bei denen es sich um Co- oder Terpolymere aus mindestens einem $\alpha,\beta$-ungesättigten Nitril, mindestens einem konjugierten Dien und optional einem oder mehreren weiteren copolymerisierbaren Monomeren handelt.

NBR wird durch Emulsionspolymerisation hergestellt, wobei zunächst ein NBR-Latex erhalten wird. Der NBR-Feststoff wird aus diesem Latex durch Koagulation mittels Salzen oder Säuren isoliert. Über die Koagulation von Latices mit Metallsalzen ist bekannt, dass von einwertigen Metallionen, z.B. in Form von Natriumchlorid, deutlich größere Mengen benötigt werden als von mehrwertigen Metallionen, z.B. in Form von Calciumchlorid oder Magnesiumchlorid (Kolloid-Z. 154, 154 (1957)). Aus Houben-Weyl (1961), Methoden der Org. Chemie, Makromolekulare Stoffe 1, S. 484 ist es ferner bekannt, dass der Einsatz mehrwertiger Metallionen zu "einem mehr oder weniger großen Einschluss des Emulgators im Produkt" führt. Gemäß Houben-Weyl (1961), Methoden der Org. Chemie, Makromolekulare Stoffe 1, S. 479 "müssen nicht nur die benutzten Elektrolyte sehr sorgfältig wieder ausgewaschen werden, sondern das Fertigprodukt soll auch frei von den Katalysatoren und Emulgatoren des Ansatzes sein". Schon geringe Reste von Elektrolyten ergeben trübe und wolkige Press- und Spritzstücke, verderben die elektrischen Eigenschaften und erhöhen das Wasseraufnahmevermögen des Fertigprodukts" (Zitat). Im Houben-Weyl findet sich jedoch kein Hinweis, ob und in welcher Weise die Aufarbeitung des Latex die Verarbeitungssicherheit des Kautschuks oder den Ionengehalt und damit verbundene Eigenschaften beeinflusst.

In den letzten Jahren sind die Ansprüche der Industrie an farbstabile Nitrilkautschuke gestiegen. In der breiten Palette von NBR Kautschuken gibt es auch eine Vielzahl von Aluminium gefällten Typen, die oftmals nur eine unzureichende Farbstabilität zeigen oder aber einen zu hohen Salzgehalt aufweisen, welcher sich negativ auf die Produkteigenschaften auswirken kann. Der hohe Salzgehalt kann auf die Besonderheit der Fällung mittels Aluminiumsalzen gegenüber einer standardmäßigen Fällung mit Calciumsalzen zurückgeführt werden. Aluminium ist gegenüber Calcium reaktiver und durch sein amphoteres Verhalten schwieriger durch Wahl geeigneter Koagulationsbedingungen aus dem Kautschuk zu entfernen. Des Weiteren können Aluminiumsalze im Gegensatz zu anderen typischen Fällsalzen unerwünschte Nebenreaktionen katalysieren, die zu einer Farbveränderung des Kautschuks oder einer zu schnellen Vulkanisation führen können. Nichtsdestotrotz zeigen Aluminium gefällte Nitrilkautschuke einige sehr gute Eigenschaften für technische Gummiartikel, weshalb mit Aluminium gefällte Nitrilkautschuke trotz vieler Prozess- und Eigenschaftsprobleme im Markt erhältlich sind.

Aus DE102007024008A ist die Bereitstellung lagerstabiler Nitrilkautschuke durch Koagulation eines NBR Latex mittels einer speziellen Calcium Fällung bekannt, wobei ein Kautschuk erhalten wird, der nach der Koagulation einen Calcium Gehalt von mindestens 150 ppm und einen Chlorid Gehalt von mindestens 40 ppm aufweist. Optional können zusätzlich zu den Calcium-Salzen weitere Salze in der Koagulation verwendet werden, unter anderem auch Aluminiumsalze, es wird jedoch keine Information gegeben, wie man stabile, salzarme Nitrilkautschuke durch eine Aluminium Fällung und nachfolgende Aufarbeitung erhält.

In JP 2006/063247A2 wird ein Compound aus einem Ethylen-$\alpha$-olefin Copolymer und einem Nitrilkautschuk beschrieben. Hierbei wird der Nitrilkautschuk durch Emulsionspolymerisation hergestellt und der erhaltene Latex mit Aluminiumsulfat bei einem pH-Wert kleiner gleich 6 gefällt. Die Fällung erfolgt somit ausschließlich im Sauren. Es werden jedoch keine Informationen gegeben, wie die anschließende Wäsche der Kautschukkrümel durchgeführt wird und welche Bedingungen hierbei einzuhalten sind. Ob ein Einfluss der Koagulations- und Waschbedingungen auf den Aluminiumgehalt im Endprodukt, die Farbstabilität oder die Verarbeitungssicherheit besteht, wird weder untersucht noch nahegelegt.

JP 5078427A2 beschreibt die Herstellung von Harzen durch eine Graft-Polymerisation in Emulsion. Hierbei werden Acrylate und Acrylnitril in Anwesenheit eines NBR Latex polymerisiert, um so das gewünschte Harz zu erhalten. Diese Latices werden durch eine Kombination aus Aluminium- und Magnesiumsalzen koaguliert, wobei die Fällung bei einem pH Wert im Bereich von 2 bis 7 und die Wäsche ebenfalls bei einem pH Wert im Bereich von 4 bis 7 durchgeführt werden. Die beschriebenen Fällbedingungen werden nicht in Verbindung gebracht mit den Salz- oder Ionengehalten in den Kautschuken oder deren Verarbeitungssicherheit.

In JP S46/039477 wird ein Flockungs- bzw. Koagulationsverfahren für synthetischen Kautschuklatex beschrieben, bei dem zu dem Kautschuklatex basisches Aluminiumchlorid und basisches Aluminiumsulfat einzeln oder als Gemisch zugegeben wird. Es wird dargelegt, dass bei der Verwendung der genannten Koagulantien keine besondere Behandlungsweise erforderlich ist. Da die Koagulantien leicht in Wasser verdünnt werden können, können sie in beliebiger Menge in Wasser verdünnt in den Latex eingegossen werden. Durch das Eingießen des Aluminiumkoagulanz wird der pH-Wert des Latex verringert, aber die Flockung und Koagulierung wird durchgeführt, indem die eingegossene Menge so reguliert wird, dass der pH-Wert in einem Bereich von 6,5 bis 7,0 bleibt.

Hinweise auf eine besondere Bedeutung der Adjustierung des pH Wertes während der Koagulation und der nachfolgenden Wäsche zwecks Erreichens eines stabilen Aluminium-gefällten Nitrilkautschuks, der einen gleichbleibenden Ionengehalt aufweist, finden sich nicht.

DE 2 221 094 A beschreibt die Herstellung von hoch acrylnitrilhaltigen carboxylierten Nitrilkautschuken mittels Emulsionspolymerisation und deren besondere Ölbeständigkeit. Die erhaltenen Latices werden mittels Aluminiumsulfat koaguliert, wobei keinerlei Einzelheiten zur Fällung oder zur Wäsche der erhaltenden Kautschukkrümel angegeben werden. Weder die resultierenden Ionengehalte noch die Stabilität der Al-gefällten Kautschuke noch die Art und Weise, wie man diese beeinflussen kann, wird beschrieben.

Gemäß Angew. Makromol. Chem. 1986, 145-146, 161-179 besteht eine äußerst wirksame Maßnahme zur Verbesserung der Lagerstabilität von Nitrilkautschuk in einer selektiven Hydrierung der vom Butadien herrührenden Doppelbindungen bei gleichzeitigem Erhalt der Dreifachbindungen der Nitrilgruppen. Für viele Anwendungen sind die durch die Hydrierung erzielten Eigenschaftsänderungen erwünscht, jedoch nicht für alle. Die Hydrierung ist zudem aufwändig und erfordert eine Reihe zusätzlicher Verfahrensschritte. Außerdem werden durch die Hydrierung die Glastemperaturen im Vergleich zum nicht hydrierten Ausgangsprodukt verschlechtert. Aus diesem Grund stellt die Hydrierung nicht für alle Anwendungen eine geeignete Lösung des Problems dar.

Aus DD 154 702 ist ein Verfahren zur radikalischen Copolymerisation von Butadien und Acrylnitril in Emulsion bekannt, das über ein spezielles, zweckmäßigerweise computergestütztes Dosierprogramm für die Monomere sowie den Molekulargewichtsregler, wie z.B. tert.-Dodecylmercaptan, gesteuert wird und bei dem die erhaltenen Latices durch Koagulation im sauren Medium zum Festkautschuk aufgearbeitet werden. Als wesentlicher Vorteil des Verfahrens wird ausgeführt, dass die als Emulgatoren eingesetzten Harz- und/oder Fettsäureseifen durch die Verwendung von Säuren bei der Koagulation im Kautschuk verbleiben, also nicht wie bei anderen Verfahren ausgewaschen werden. Hierfür wird neben dem Vorteil guter Eigenschaften des NBR besonders die Verbesserung der Ökonomie des Verfahrens und die Vermeidung der Abwasserbelastung durch ausgewaschenen Emulgator genannt. Für die erhaltenen NBR-Copolymerisate mit 10-30 Gew.% Acrylnitril wird ausgeführt, dass sie sich durch gute Elastizitäts- und Tieftemperatur-Eigenschaften kombiniert mit einer erhöhten Quellbeständigkeit und einer vorteilhaften Verarbeitbarkeit auszeichnen. Maßnahmen, durch die eine Beeinflussung der Stabilität des Nitrilkautschuks möglich ist, insbesondere für Aluminiumfällungen, können der Lehre dieses Patents nicht entnommen werden.

In EP-A-0 692 496, EP-A-0 779 301 **und** EP-A-0 779 300 werden jeweils Nitrilkautschuke beschrieben, denen gemeinsam ist, dass sie 10-60 Gew.% ungesättigtes Nitril und eine Mooney-Viskosität im Bereich von 15-150 bzw. gemäß EP-A-0 692 496 von 15-65 besitzen und jeweils mindestens 0,03 mol einer $C_{12}$-$C_{16}$-Alkylthio-Gruppe pro 100 mol Monomer-Einheiten aufweisen, wobei diese Alkylthiogruppe mindestens drei tertiäre C-Atome enthält und ein Schwefel-Atom, das direkt an mindestens eines der tertiären C-Atome gebunden ist. Die NBR-Herstellung erfolgt jeweils in Gegenwart eines entsprechend aufgebauten $C_{12}$-$C_{16}$-Alkylthiols als Molekulargewichtsregler, der als "Chain transfer agent" fungiert und somit als Endgruppe in die Polymerketten eingebaut wird.

Für die Nitrilkautschuke gemäß EP-A-0 779 300 wird ausgeführt, dass sie eine Breite "ΔAN" (AN = ungesättigtes Nitril) der Zusammensetzungsverteilung des ungesättigten Nitrils im Copolymer im Bereich von 3-20 besitzen. Das Herstellverfahren zeichnet sich dadurch aus, dass nur 30-80 Gew.% der gesamten Monomer-Menge zu Polymerisationsbeginn eingesetzt werden und die restliche Monomer-Menge erst bei einem Umsatz der Polymerisation von 20-70 Gew.% zudosiert wird.

Für die Nitrilkautschuke gemäß EP-A-0 779 301 wird ausgeführt, dass sie 3-20 Gew.% einer Fraktion mit niedrigem Molekulargewicht mit einem zahlenmittleren Molekulargewicht $M_n$ kleiner 35.000 aufweisen. Das Verfahren zu ihrer Herstellung unterscheidet sich von dem der EP-A-0 692 496 dadurch, dass nur 10-95 Gew.% des Alkylthiols vor der Polymerisation in das Monomeren-Gemisch eingemischt werden und die restliche Menge des Alkylthiols erst bei Erreichen eines Polymerisationsumsatzes von 20-70 Gew.% zudosiert wird.

Im Hinblick auf die Latex-Koagulation wird in EP-A-0 692 496, EP-A-0 779 301 und EP-A-0 779 300 offenbart, dass beliebige Koagulantien eingesetzt werden können. Als anorganische Koagulantien werden Calciumchlorid und Aluminiumchlorid erwähnt und eingesetzt. Der Fokus liegt auf Nitrilkautschuken, die im wesentlichen halogenfrei sind und erhalten werden, indem die Latex-Koagulation in Gegenwart eines nichtionischen oberflächenaktiven Hilfsmittels und unter Verwendung von halogen-freien Metallsalzen wie Aluminiumsulfat, Magnesiumsulfat und Natriumsulfat durchgeführt wird. Detaillierte Parameter für die Fällung des Latex und der anschließend erforderlichen Wäsche der Kautschukkrümel werden nicht gegeben. Über die Stabilität eines Al-gefällten Kautschuks in Abhängigkeit der pH Werte in der Fällung und Wäsche wird nichts ausgeführt.

Zusammenfassend ist festzustellen, dass bis heute kein Verfahren beschrieben wurde, welches die Synthese von Aluminiumsalz gefällten Nitrilkautschuken ermöglicht, die vorhersehbar eine gute Verarbeitungssicherheit, eine gute Farbstabilität und einen bestimmten Aluminiumgehalt besitzen.

**Die Aufgabe der vorliegenden Erfindung** bestand somit darin, Aluminiumsalz gefällte Nitrilkautschuke zur Verfügung zu stellen, die vorhersehbar eine gute Farbstabilität und einen bestimmten Aluminiumgehalt besitzen und damit gleichzeitig sehr gute Eigenschaften bei der Verarbeitung und ein gutes Vulkanisationsprofil besitzen.

**Es wurde überraschenderweise gefunden,** dass man die gewünschten salzarmen und farbstabilen Nitrilkautschuke, darauf basierende vulkanisierbare Mischungen sowie darauf basierende Vulkanisate mit exzellenten Vulkanisateigenschaften erhält, wenn die Fällung der nach der Polymerisation erhaltenen Nitrilkautschuk-Latices unter Einhaltung spezieller Bedingungen mittels Aluminiumsalzen im Sauren und die nachfolgende Wäsche der Kautschukkrümel im Basischen erfolgt.

**Gegenstand der vorliegenden Erfindung** ist somit ein **Nitrilkautschuk,** der Wiederholungseinheiten mindestens eines $\alpha,\beta$-ungesättigten Nitril-Monomeren und mindestens eines konjugierten Dien-Monomeren enthält und der einen Aluminiumindex E gemäß der allgemeinen Formel (I) von kleiner gleich 35.0 ppm/MU, bezogen auf den Nitrilkautschuk aufweist, mit

$$E = \frac{[\text{Aluminium}]}{\text{Mooney-Viskosität}} \qquad (I)$$

worin

[Aluminium] den Aluminium Gehalt des Nitrilkautschuks in ppm bedeutet und
Mooney-Viskosität den Wert für die Mooney-Viskosität (ML 1+4 at 100°C) des Nitrilkautschuks angegeben in Mooney Einheiten (MU) darstellt.

Der **Aluminium-Gehalt** "[Aluminium]" wird durch ICP-OES (inductively coupled plasma - optical emission spectrometry) bei einer Wellenlänge von 309,271 nm gegen mit Säurematrix angepasste Kalibrierlösungen bestimmt. Für die Bestimmung des **Aluminium-Gehalts** hat sich folgende Methode bewährt und wird im Rahmen dieser Erfindung eingesetzt: Es werden 0,5 g des Nitrilkautschuks durch trockene Veraschung bei 550°C im Platintiegel mit anschließendem Lösen der Asche in Salzsäure aufgeschlossen. Nach geeigneter Verdünnung der Aufschlusslösung mit deionisiertem Wasser wird der Aluminium-Gehalt durch ICP-OES (inductively coupled plasma - optical emission spectrometry) bei einer Wellenlänge von 309,271nm gegen mit Säurematrix angepasste Kalibrierlösungen bestimmt. Je nach Konzentration der Elemente in der Aufschlusslösung bzw. Empfindlichkeit des verwendeten Messgeräts werden die Konzentrationen der Probelösungen für die jeweils verwendeten Wellenlängen an den linearen Bereich der Kalibrierung angepasst (B. Welz "Atomic Absorption Spectrometry", 2nd Ed., Verlag Chemie, Weinheim 1985, S.395).

Die erfindungsgemäßen Nitrilkautschuke besitzen einen **Aluminiumindex E** gemäß der allgemeinen Formel (I), kleiner gleich 35.0 ppm/MU, bevorzugt im Bereich von 3 ppm/MU bis kleiner gleich 35 ppm/MU, besonders bevorzugt im Bereich von 5 ppm/MU bis kleiner 35ppm/MU und ganz besonders bevorzugt im Bereich von 7 ppm/MU bis kleiner 35 ppm/MU, bezogen auf den Nitrilkautschuk.

Überraschenderweise besitzen die erfindungsgemäßen Nitrilkautschuke das gewünschte sehr gute Verarbeitungsverhalten in Form einer erheblichen Scorchsicherheit und zeigen ein gutes optisches Verhalten nach Alterung.

Die Scorchsicherheit kann über das Anvulkanisationsverhalten und die Anvulkanisationszeit $t_5$ nach DIN53523 gemessen werden. Hierbei beschreibt die Anvulkanisationszeit $t_5$ die Zeit in Minuten vom Beginn der Messung bis zum Anstieg der Mooney-Viskosität um 5 Mooney Einheiten über das Viskositätsminimum. Für die praktische Anwendung führt bereits eine Verringerung der Anvulkanisationszeit $t_5$ um 20 bis 30 Sekunden zu relevante Verbesserungen bei der Verarbeitung.

**Gegenstand der vorliegenden Erfindung** ist ferner ein **Verfahren zur Herstellung von Nitrilkautschuken** durch Emulsionspolymerisation mindestens eines $\alpha,\beta$-ungesättigten Nitril-Monomeren und mindestens eines konjugierten Dien-Monomeren, dadurch gekennzeichnet, dass

(i) der nach der Polymerisation anfallende, den Nitrilkautschuk enthaltende Latex unter Einsatz mindestens eines Aluminiumsalzes koaguliert wird, wobei die Koagulation bei einem pH Wert im Bereich von 1 bis 4,5, bevorzugt von 1 bis 4, besonders bevorzugt von 1 bis 3,75 und insbesondere von 1 bis 3,5 erfolgt und

(ii) die nachfolgende Wäsche der Nitrilkautschuks bei einem pH Wert im Bereich von 6 bis 12, bevorzugt von 6,25 bis 11, besonders bevorzugt von 6,5 bis 10,5 und insbesondere von 6,75 bis 10,5 durchgeführt wird.

**Weitere Gegenstände der vorliegenden Erfindung** sind ferner eine vulkanisierbare Mischung enthaltend den erfindungsgemäßen Nitrilkautschuk, ein Verfahren zur Herstellung dieser vulkanisierbaren Mischung, Vulkanisate auf Basis dieser vulkanisierbaren Mischung und ein Verfahren zur Herstellung solcher Vulkanisate.

**Nitrilkautschuk:**

Die erfindungsgemäßen Nitrilkautschuke, die gegebenenfalls hydriert sind, weisen Wiederholungseinheiten mindestens eines $\alpha,\beta$-ungesättigten Nitrils, mindestens eines konjugierten Diens und gegebenenfalls eines oder mehrerer weiterer copolymerisierbarer Monomere auf.

Das konjugierte Dien im Nitrilkautschuk kann von jeder Natur sein. Bevorzugt werden ($C_4$-$C_6$) konjugierte Diene eingesetzt. Besonders bevorzugt sind 1,2-Butadien, 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als $\alpha,\beta$-ungesättigtes Nitril kann jedes bekannte $\alpha,\beta$-ungesättigte Nitril eingesetzt werden, bevorzugt sind ($C_3$-$C_5$)-$\alpha,\beta$-ungesättigte Nitrile wie Acrylnitril, Methacrylnitril, Ethacrylnitril oder Mischungen davon. Besonders bevorzugt ist Acrylnitril.

Ein besonders bevorzugter Nitrilkautschuk ist ein Copolymer aus Acrylnitril und 1,3-Butadien. In einer geeigneten Ausführungsform werden keine unter Einsatz von Monomeren, insbesondere Acrylaten gegrafteten Nitrilkautschuke eingesetzt.

Als weitere copolymerisierbare Termonomere können beispielsweise aromatische Vinylmonomere, bevorzugt Styrol, $\alpha$-Methylstyrol und Vinylpyridin, fluorhaltige Vinylmonomere, bevorzugt Fluorethylvinylether, Fluorpropylvinylether, o-Fluormethylstyrol, Vinylpentafluorbenzoat, Difluoro-ethylen und Tetrafluoroethylen, oder auch N-(4-anilinophenyl)acrylamid, N-(4-anilinophenyl) methacrylamid, N-(4-anilinphenyl)cinnamid, N-(4-anilinophenyl)crotonamid, N-phenyl-4-(3-vinylbenzyloxy)anilin und N-phenyl-4-(4-vinylbenzyloxy)anilin eingesetzt werden sowie nicht-konjugierte Diene, wie 4-Cyanocyclohexen und 4-Vinylcyclohexen, oder auch Alkine, wie 1- oder 2-Butin.

Alternativ können als weitere copolymerisierbare Termonomere carboxygruppenhaltige, copolymerisierbare Termonomere eingesetzt werden, beispielsweise $\alpha,\beta$-ungesättigte Monocarbonsäuren, deren Ester, $\alpha,\beta$-ungesättigte Dicarbonsäuren, deren Mono- oder -Diester oder um deren entsprechenden Anhydride oder Amide.

Als $\alpha,\beta$-ungesättigte Monocarbonsäuren können bevorzugt Acrylsäure und Methacrylsäure eingesetzt werden.

Einsetzbar sind auch Ester der $\alpha,\beta$-ungesättigten Monocarbonsäuren, bevorzugt deren Alkylester und Alkoxyalkylester. Bevorzugt sind die Alkylester, insbesondere $C_1$-$C_{18}$ Alkylester der $\alpha,\beta$-ungesättigten Monocarbonsäuren, Besonders bevorzugt sind Alkylester, insbesondere $C_1$-$C_{18}$ Alkylester der Acrylsäure oder der Methacrylsäure, insbesondere Methylacrylat, Ethylacrylat, Propylacrylat, n-Butylacrylat, tert.-Butylacrylat, 2-Ethylhexylacrylat, n-Dodecylacrylat, Methylmethacrylat, Ethylmethacrylate, Butylmethacrylat und 2-Ethylhexyl-methacrylat. Bevorzugt sind auch Alkoxyalkylester der $\alpha,\beta$-ungesättigten Monocarbonsäuren, besonders bevorzugt Alkoxyalkylester der Acrylsäure oder der Methacrylsäure, insbesondere C2-C12-Alkoxyalkylester der Acrylsäure oder der Methacrylsäure, ganz besonders bevorzugt Methoxymethylacrylat, Methoxyethyl(meth)acrylat und Ethoxyethyl(meth)acrylat. Einsetzbar sind auch Mischungen von Alkylestern, wie z.B. den vorgenannten, mit Alkoxyalkylestern, z.B. in Form der vorgenannten. Einsetzbar sind auch Cyanoalkylacrylat and Cyanoalkylmethacrylate, in denen die C-Atom-Zahl der Cyanoalkylgruppe 2-12 beträgt, vorzugsweise $\alpha$-Cyanoethylacrylat, $\alpha$-Cyanoethylacrylat und Cyanobutylmethacrylat. Einsetzbar sind auch Hydroxyalkylacrylate and Hydroxyalkylmethacrylat, in denen die C-Atom-Zahl der Hydroxyalkylgruppen 1-12 beträgt, vorzugsweise 2-Hydroxyethylacrylat, 2-Hydroxyethylmethacrylat und 3-Hydroxypropylacrylat; Einsetzbar sind auch Fluor-substituierte Benzylgruppenhaltige Acrylate oder Methacrylate, vorzugsweise Fluorobenzylacrylat, und Fluorobenzylmethacrylat. Einsetzbar sind auch Fluoroalkylgruppenhaltige Acrylate und-Methacrylate, vorzugsweise Trifluoroethylacrylat und Tetrafluoropropylmethacrylat. Einsetzbar sind auch Aminogruppenhaltige $\alpha,\beta$-ungesättigte Carbonsäureester wie Dimethylaminomethylacrylat und Diethylaminoethylacrylat.

Als weitere copolymerisierbare Monomere können ferner $\alpha,\beta$-ungesättigte Dicarbonsäuren, bevorzugt Maleinsäure, Fumarsäure, Crotonsäure, Itaconsäure, Citraconsäure und Mesaconsäure, eingesetzt werden.

Eingesetzt werden können ferner $\alpha,\beta$-ungesättigte Dicarbonsäureanhydride, bevorzugt Maleinsäureanhydrid, Itaconsäureanhydrid, Citraconsäureanhydrid und Mesaconsäureanhydrid.

Eingesetzt werden können ferner Mono- oder Diester von a,$\beta$-ungesättigten Dicarbonsäuren.

Bei diesen $\alpha,\beta$-ungesättigten Dicarbonsäuremono- oder diestern kann es sich beispielsweise handeln um Alkyl-, bevorzugt $C_1$-$C_{10}$-Alkyl, insbesondere Ethyl-, n-Propyl-, iso-Propyl, n-Butyl-, tert.-Butyl, n-Pentyl- oder n-Hexyl-, Alkoxyalkyl-, bevorzugt $C_2$-$C_{12}$ Alkoxyalkyl-, besonders bevorzugt $C_3$-$C_8$-Alkoxyalkyl, Hydroxyalkyl, bevorzugt $C_1$-$C_{12}$ Hydroxyalkyl-, besonders bevorzugt $C_2$-$C_8$-Hydroxyalkyl, Cycloalkyl-, bevorzugt $C_5$-$C_{12}$-Cycloalkyl-, besonders bevorzugt $C_6$-$C_{12}$-Cycloalkyl, Alkylcycloalkyl-, bevorzugt $C_6$-$C_{12}$-Alkylcycloalkyl-, besonders bevorzugt $C_7$-$C_{10}$-Alkylcycloalkyl, Aryl-, bevorzugt $C_6$-$C_{14}$-Aryl-Mono- oder -Diester, wobei es sich im Fall der Diester jeweils auch um gemischte Ester handeln kann.

Besonders bevorzugte Alkylester von $\alpha,\beta$-ungesättigten Monocarbonsäuren sind Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethlyhexyl(meth)acrylat, Octyl(meth)acrylat, 2-Propylheptylacrylat und Lauryl(meth)acrylat. Insbesondere wird n-Butylacrylat eingesetzt.

Besonders bevorzugte Alkoxyalkylester der α,β-ungesättigten Monocarbonsäuren sind Methoxyethyl(meth)acrylat, Ethoxyethyl(meth)acrylat und Methoxyethyl(meth)acrylat. Insbesondere wird Methoxyethylacrylat eingesetzt.

Besonders bevorzugte Hydroxyalkylester der α,β-ungesättigten Monocarbonsäuren sind Hydroxyethyl(meth)acrylat, Hydroxypropyl-(meth)acrylat und Hydroxy(butyl(meth)acrylat.

Als sonstige Ester der α,β-ungesättigten Monocarbonsäuren werden ferner beispielsweise Polyethylenglykol(meth)acrylat, Polypropylenglykol(meth)acrylat, Glycidyl(meth)acrylat, Epoxy(meth)acrylat, N-(2-Hydroxyethyl)acrylamide, N-(2-Hydroxymethyl)acrylamide und Urethan(meth)acrylat eingesetzt.

Beispiele von α,ß-ungesättigten Dicarbonsäuremonoestern umfassen

- Maleinsäuremonoalkylester, bevorzugt Monomethylmaleat, Monoethylmaleat, Monopropyl maleat und Mono-n-butylmaleat;
- Maleinsäuremonocycloalkylester, bevorzugt Monocyclopentylmaleat, Monocyclohexyl maleat und Monocycloheptylmaleat;
- Maleinsäuremonoalkylcycloalkylester, bevorzugt Monomethylcyclopentylmaleat und Monoethylcyclohexylmaleat;
- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropyl fumarat und Mono-n-butyl fumarat;
- Fumarsäuremonocycloalkylester, bevorzugt Monocyclopentylfumarat, Monocyclohexyl fumarat und Monocycloheptylfumarat;
- Fumarsäuremonoalkylcycloalkylester, bevorzugt Monomethylcyclopentylfumarat und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butyl citraconat;
- Citraconsäuremonocycloalkylester, bevorzugt Monocyclopentylcitraconat, Monocyclohexyl citraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;
- Citraconsäuremonobenzylester, bevorzgut Monobenzylcitraconat;
- Itaconsäuremonoalkylester, bevorzugt Monomethylitaconat, Monoethylitaconat, Monopropyl itaconat und Mono-n-butyl itaconat;
- Itaconsäuremonocycloalkylester, bevorzugt Monocyclopentylitaconat, Monocyclohexyl itaconat und Monocycloheptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylester, bevorzugt Monobenzylitaconat;
- Mesaconsäuremonoalkylester, bevorzugt Mesaconsäuremonoethylester;

Als α,ß-ungesättigte Dicarbonsäurediester können die analogen Diester basierend auf den zuvor genannten Monoestergruppen eingesetzt werden, wobei es sich bei den Estergruppen auch um chemisch verschiedene handeln kann.

Als weitere copolymerisierbare Monomere kommen ferner radikalisch polymerisierbare Verbindungen mit in Betracht, die pro Molekül mindestens zwei olefinische Doppelbindungen enthalten. Beispiele mehrfach ungesättigter Verbindungen sind Acrylate, Methacrylate oder Itaconate von Polyolen wie z.B. Ethylenglykoldiacrylat, Diethylenglykoldimethacrylat, Triethylenglylkoldiacrylat, Butandiol-1,4-diacrylat, Propandiol-1,2-diacrylat, Butandiol-1,3-dimethacrylat, Neopentylglykoldiacrylat, Trimethylolpropandi(meth)acrylat, Trimethylolethan-di(meth)acrylat, Glycerindi- und -triacrylat, Pentaerythritdi-, -tri- und tetraacrylat oder -methacrylat, Dipentaerythrittetra, -penta- und hexaacrylat oder -methacrylat oder -itaconat, Sorbittetraacrylat, Sorbithexamethacrylat, Diacrylate oder Dimethacrylate von 1,4-Cyclohexandiol, 1,4-Dimethylolcyclohexan, 2,2-Bis(4-hydroxyphenyl)propan, von Polyethylenglykolen oder von Oligoestern oder Oligourethanen mit endständigen Hydroxylgruppen. Als mehrfach ungesättigte Monomere können auch Acrylamide verwendet werden wie z.B. Methylen-bisacrylamid, Hexamethylen-1,6-bisacrylamid, Diethylentriamin-tris-methacrylamid, Bis(methacrylamido-propoxy)ethan oder 2-Acrylamido-ethylacrylat. Beispiele für mehrfach ungesättigte Vinyl- und Allylverbindungen sind Divinylbenzol, Ethylenglykoldivinylether, Diallylphthalat, Allylmethacrylat, Diallylmaleat, Triallylisocyanurat oder Triallylphosphat.

Die Anteile an konjugiertem Dien und α,β-ungesättigtem Nitril in den erfindungsgemäßen Nitrilkautschuken können in weiten Bereichen variieren. Der Anteil des oder der Summe der konjugierten Diene liegt üblicherweise im Bereich von 20 bis 95 Gew.%, bevorzugt im Bereich von 40 bis 90 Gew.-%, besonders bevorzugt im Bereich von 60 bis 85 Gew. %, bezogen auf das Gesamtpolymer. Der Anteil des oder der Summe der α,β-ungesättigten Nitrile liegt üblicherweise bei 5 bis 80 Gew.%, bevorzugt bei 10 bis 60 Gew.-%, besonders bevorzugt bei 15 bis 40 Gew.-%, bezogen auf das Gesamtpolymer. Die Anteile der Monomere summieren sich jeweils zu 100 Gew.-% auf.

Die zusätzlichen Monomere können je nach Art des/der Termonomere in Mengen von 0 bis 40 Gew.%, bezogen auf das Gesamtpolymer, vorliegen. In diesem Fall werden entsprechende Anteile des oder der konjugierten Diene und/oder des oder der α,β-ungesättigten Nitrile durch die Anteile der zusätzlichen Monomere ersetzt, wobei sich die Anteile aller Monomere jeweils zu 100 Gew.% aufsummieren.

Werden als zusätzliche Monomere Ester der (Meth)acrylsäure eingesetzt, so erfolgt dies üblicherweise in Mengen von 0.5 bis 25 Gew.%.

Werden als zusätzliche Monomere α,β-ungesättigte Mono- oder Dicarbonsäuren eingesetzt, so erfolgt dies üblicherweise in Mengen von weniger als 10 Gew.%.

Der Stickstoffgehalt wird in den erfindungsgemäßen Nitrilkautschuken gemäß DIN 53 625 nach Kjeldahl bestimmt. Aufgrund des Gehalts an polaren Comonomeren sind die Nitrilkautschuke üblicherweise in Methylethylketon bei 20°C ≥ 85 Gew. % löslich.

In einer besonders geeigneten Ausführungform werden Nitrilkautschuke, insbesondere AcrylnitrilButadien Copolymere, eingesetzt, bei denen es sich nicht um Graftcopolymere handelt, die durch ein Grafting unter Einsatz von weiteren Monomeren, insbesondere keinen Acrylaten, auf das Ausgangscopolymer erhalten wurden.

Die Nitrilkautschuke weisen Mooney Viskositäten (ML (1+4 @100°C)) von 10 bis 160 Mooney-Einheiten, bevorzugt von 20 bis 150 Mooney-Einheiten, besonders bevorzugt von 25 bis 140 Mooney-Einheiten auf. Die Mooney-Viskosität wird gemäß ASTM D1646 an unkalandrierten Proben ("unmassed") bestimmt.

Die Glastemperaturen der Nitrilkautschuke liegen im Bereich -80°C bis +20°C, vorzugsweise im Bereich von -70°C bis +10° und besonders bevorzugt im Bereich von -60°C bis 0°C.

Bevorzugt sind erfindungsgemäße Nitrilkautschuke, bzw. optional ganz oder teilweise hydrierte Nitrilkautschuke, die Wiederholungseinheiten von Acrylnitril, 1,3-Butadien und gegebenenfalls von einem oder mehreren weiteren copolymerisierbaren Monomeren aufweisen. Ebenso bevorzugt sind Nitrilkautschuke, die Wiederholungseinheiten von Acrylnitril, 1,3-Butadien und einer oder mehreren α,β-ungesättigten Mono- oder Dicarbonsäure, deren Estern oder Amiden aufweisen, und insbesondere Wiederholungseinheiten eines Alkylesters einer α,β-ungesättigten Carbonsäuren, ganz besonders bevorzugt von Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethylhexyl(meth)acrylat, Octyl(meth)acrylat oder Lauryl(meth)acrylat.

**Verfahren zur Herstellung der Kautschuke:**

Das erfindungsgemäße **Verfahren zur Herstellung der Nitrilkautschuke** durch Emulsionspolymerisation mindestens eines α,β-ungesättigten Nitril-Monomeren und mindestens eines konjugierten Dien-Monomeren ist dadurch gekennzeichnet, dass

(i) der nach der Polymerisation anfallende, den Nitrilkautschuk enthaltende Latex unter Einsatz mindestens eines Aluminiumsalzes koaguliert wird, wobei die Koagulation bei einem pH Wert im Bereich von 1 bis 4,5, bevorzugt von 1 bis 4, besonders bevorzugt von 1 bis 3,75 und insbesondere von 1 bis 3,5 erfolgt und

(ii) die nachfolgende Wäsche der Nitrilkautschuks bei einem pH Wert im Bereich von 6 bis 12, bevorzugt von 6,25 bis 11, besonders bevorzugt von 6,5 bis 10,5 und insbesondere von 6,75 bis 10,5 durchgeführt wird.

Die Herstellung der Nitrilkautschuke erfolgt durch Emulsionspolymerisation.

Als **Emulgatoren** können wasserlösliche Salze anionischer Emulgatoren oder auch neutrale Emulgatoren eingesetzt werden. Bevorzugt werden anionische Emulgatoren eingesetzt.

Als anionische Emulgatoren können modifizierte Harzsäuren eingesetzt werden, die durch Dimerisierung, Disproportionierung, Hydrierung und Modifikation von Harzsäuregemischen erhalten werden, die Abietinsäure, Neoabietinsäure, Palustrinsäure, Lävopimarsäure enthalten. Eine besonders bevorzugte modifizierte Harzsäure ist die disproportionierte Harzsäure (Ullmann's Encyclopedia of Industrial Chemistry, 6. Auflage, Band 31, S. 345-355).

Als anionische Emulgatoren können auch $C_6$-$C_{22}$-Fettsäuren eingesetzt werden. Sie können voll gesättigt sein oder auch eine oder mehrere Doppelbindungen im Molekül enthalten. Beispiele für Fettsäuren sind Capronsäure, Laurinsäure, Myristinsäure, Palmitinsäure, Stearinsäure, Ölsäure, Linolsäure, Linolensäure. Die Carbonsäuren basieren üblicherweise auf herkunftsspezifischen Ölen oder Fetten wie z. B. Castoroil, Baumwollsaat, Erdnussöl, Leinsamenöl, Kokosnussfett, Palmkernöl, Olivenöl, Rapsöl, Sojabohnenöl, Fischöl und Rindertalg etc. (Ullmann's Encyclopedia of Industrial Chemistry, 6. Auflage, Band 13, S. 75-108). Bevorzugte Carbonsäuren leiten sich von der Kokosfettsäure und von Rindertalg ab und sind teil- bzw. vollhydriert.

Derartige Carbonsäuren auf Basis modifizierter Harzsäuren bzw. Fettsäuren werden als wasserlösliche Lithium-Natrium, Kalium und Ammoniumsalze verwendet. Die Natrium- und Kaliumsalze sind bevorzugt.

Anionische Emulgatoren sind ferner Sulfonate, Sulfate und Phosphate, die an einen organischen Rest gebunden sind. Als organischer Rest kommen aliphatische Reste, aromatische Reste, alkylierte aromatische Reste, kondensierte aromatische Reste, sowie methylenverbrückte aromatische Reste infrage, wobei die methylenverbrückten und kondensierten aromatischen Reste zusätzlich alkyliert sein können. Die Länge der Alkylketten beträgt 6 bis 25 C-Atome. Die Länge der an die Aromaten gebundenen Alkylketten liegt zwischen 3 und 12 C-Atomen.

Die Sulfate, Sulfonate und Phosphate werden als Lithium-, Natrium-, Kalium- und Ammoniumsalze eingesetzt. Die Natrium-, Kalium und Ammoniumsalze sind bevorzugt.

Beispiele für derartige Sulfonate, Sulfate und Phosphate sind Na-Laurylsulfat, Na-Alkylsulfonat, Na-Alkylarylsulfonat, Na-Salze methylenverbrückter Arylsulfonate, Na-Salze alkylierter Naphthalinsulfonate sowie die Na-Salze methylenverbrückter Naphthalinsulfonate, die auch oligomerisiert sein können, wobei der Oligomerisierungsgrad zwischen 2 bis 10 liegt. Üblicherweise liegen die alkylierten Naphthalinsulfonsäuren und die methylenverbrückten (und gegebenenfalls alkylierten) Naphthalinsulfonsäuren als Isomerengemische vor, die auch mehr als 1 Sulfonsäuregruppe (2 bis 3 Sulfonsäuregruppen) im Molekül enthalten können. Besonders bevorzugt sind Na-Laurylsulfat, Na-Alkylsulfonatgemische mit 12 bis 18 C-Atomen, Na-Alkylarylsulfonate, Na-Diisobutylennaphthalin-sulfonat, methylenverbrückte Polynaphthalinsulfonatgemische und methylenverbrückte Arylsulfonat-gemische.

Neutrale Emulgatoren leiten sich von Additionsprodukten des Ethylenoxids und des Propylenoxids an Verbindungen mit hinreichend acidem Wasserstoff ab. Hierzu gehören beispielsweise Phenol, alkyliertes Phenol und alkylierte Amine. Die mittleren Polymerisationsgrade der Epoxide liegen zwischen 2 bis 20. Beispiele für neutrale Emulgatoren sind ethoxylierte Nonylphenole mit 8, 10 und 12 Ethylenoxideinheiten. Die neutralen Emulgatoren werden üblicherweise nicht alleine, sondern in Kombination mit anionischen Emulgatoren eingesetzt.

Bevorzugt sind die Na- und K-Salze von disproportionierter Abietinsäure und von teilhydrierten Fettsäure, sowie Mischungen derselben, Natriumlaurylsulfat, Na-Alkylsulfonate, Natrium-Alkylbenzolsulfonat sowie alkylierte und methylenverbrückte Naphthalinsulfonsäuren.

Die Emulgatoren werden in einer Menge von 0,2-15 Gew.-Teilen, bevorzugt 0,5-12,5 Gew.-Teilen, besonders bevorzugt 1,0-10 Gew.-Teilen bezogen auf 100 Gew.-Teile Monomermischung eingesetzt. Die Emulsionspolymerisation wird unter Verwendung der genannten Emulgatoren durchgeführt. Falls nach Abschluss der Polymerisation Latices erhalten werden, die aufgrund einer gewissen Instabilität zur vorzeitigen Selbstkoagulation neigen, können die genannten Emulgatoren auch zur Nachstabilisierung der Latices verwendet werden. Dies kann insbesondere vor der Entfernung nicht umgesetzter Monomerer durch Behandlung mit Wasserdampf sowie vor einer Latexlagerung notwendig werden.

Zur Initiierung der Emulsionspolymerisation werden typischerweise **Polymerisationsinitiatoren** eingesetzt, die in Radikale zerfallen. Hierzu gehören Verbindungen, die eine -O-O- Einheit (Peroxo-Verbindungen) oder eine -N≡N-Einheit (Azoverbindung) enthalten, oder sich daraus ableitende Redox-Systeme.

Als **peroxidische Initiatoren** können beispielsweise die folgenden Peroxo-Verbindungen, die eine-O-O-Einheit aufweisen, eingesetzt werden: Wasserstoffperoxid, Peroxodisulfate, Peroxodiphosphate, Hydroperoxide, Persäuren, Persäureester, Persäureanhydride und Peroxide mit zwei organischen Resten. Als Salze der Peroxodischwefelsäure und der Peroxodiphosphorsäure können Natrium-, Kalium- und Ammoniumsalze eingesetzt werden. Geeignete Hydroperoxide sind z.B. t-Butylhydroperoxid, Cumolhydroperoxid, Pinanhydroperoxid und p-Menthanhydroperoxid. Geeignete Peroxide mit zwei organischen Resten sind Dibenzoylperoxid, 2,4,-Dichlorbenzoylperoxid, Di-t-butylperoxid, Dicumylperoxid, t-Butylperbenzoat, t-Butylperacetat. Bevorzugt wird p-Menthanhydroperoxid oder Pinanhydroperoxid eingesetzt.

Als **Redox-Systeme** können die folgenden Systeme aus einem Oxidationsmittel und einem Reduktionsmittel eingesetzt werden. Die Wahl geeigneter Mengen an Oxidations- und Reduktionsmittel ist dem Fachmann hinreichend geläufig.

Bei der Verwendung von Redoxsystemen verwendet man häufig zusätzlich Salze von Übergangsmetallverbindungen wie Eisen, Cobalt oder Nickel in Kombination mit geeigneten Komplexbildnern wie Natrium-Ethylendiamtetraacetat, Natrium-Nitrilotriacetat sowie Trinatriumphosphat oder Tetrakaliumdiphosphat.

Als **Oxidationsmittel** können dabei beispielsweise alle Peroxoverbindungen, die zuvor für die **peroxidischen Initiatoren** genannt wurden, eingesetzt werden.

Als **Reduktionsmittel** können im erfindungsgemäßen Verfahren beispielsweise die folgenden eingesetzt werden: Natriumformaldehydsulfoxylat, Natriumbenzaldehydsulfoxylat, reduzierende Zucker, Ascorbinsäure, Sulfenate, Sulfinate, Sulfoxylate, Dithionit, Sulfit, Metabisulfit, Disulfit, Zucker, Harnstoff, Thioharnstoff, Xanthogenate, Thioxanthogenate, Hydraziniumsalzen, Amine und Aminderivate wie Anilin, Dimethylanilin, Monoethanolamin, Diethanolamin oder Triethanolamin. Bevorzugt wird Natriumformaldehydsulfoxylat eingesetzt.

Bevorzugte Redoxsysteme sind beispielsweise: 1) Kaliumperoxodisulfat in Kombination mit Triethanolamin, 2) Ammoniumperoxodiphosphat in Kombination mit Natrimmetabisulfit ($Na_2S_2O_5$), 3) p-Menthanhydroperoxid / Natriumformaldehydsulfoxylat in Kombination mit Fe-II-Sulfat ($FeSO_4 \cdot 7\ H_2O$), Natrium-Ethylendiaminoacetat und Trinatri-

umphosphat; 4) Cumolhydroperoxid / Natriumformaldehydsulfoxylat in Kombination mit Fe-II-Sulfat (FeSO$_4$*7 H$_2$O), Natrium-Ethylendiaminoacetat und Tetrakaliumdiphosphat.

Die Menge an Oxidationsmittel beträgt 0,001 bis 1 Gew.-Teile bezogen auf 100 Gew.-Teile Monomer. Die molare Menge an Reduktionsmittel liegt zwischen 50% bis 500% bezogen auf die molare Menge des eingesetzten Oxidationsmittels.

Die molare Menge an Komplexbildner bezieht sich auf die Menge an eingesetztem Übergangsmetall und ist mit diesem üblicherweise äquimolar.

Zur Durchführung der Polymerisation werden sämtliche oder einzelne Komponenten des Initiatorsystems zu Beginn der Polymerisation der Polymerisation oder während der Polymerisation zudosiert.

Die portionsweise Zugabe sämtlicher sowie einzelner Komponenten des Initiatorsystems während der Polymerisation ist bevorzugt. Durch die sequentielle Zugabe lässt sich die Reaktionsgeschwindigkeit steuern.

Ferner wird häufig in Gegenwart sogenannter **Molekulargewichtsregler** polymerisiert, bei denen sich in der Regel um Alkylthiole handelt, die 9-16 Kohlenstoffatome enthalten. Solche Alkylthiole bzw. (Isomeren)-Mischungen von Alkylthiolen sind entweder käuflich erhältlich oder aber nach Verfahren, die in der Literatur hinlänglich beschrieben sind, für den Fachmann herstellbar.

Die **Polymerisationszeit** liegt im Bereich von 5 h bis 15 h und hängt im Wesentlichen vom Acrylnitrilgehalt der Monomermischung und von der Polymerisationstemperatur ab.

Die **Polymerisationstemperatur** liegt im Bereich von 0 bis 50°C, bevorzugt im Bereich von 5 bis 45°C, besonders bevorzugt im Bereich von 8 bis 40°C.

Bei Erreichung von **Umsätzen** im Bereich von 50 bis 99%, vorzugsweise im Bereich von 65 bis 95% wird die Polymerisation abgestoppt.

Hierfür wird dem Reaktionsgemisch ein **Stopper** zugesetzt. Hierfür geeignet sind beispielsweise Dimethyldithiocarbamat, Na-Nitrit, Mischungen von Dimethyldithiocarbamat und Na-Nitrit, Hydrazin und Hydroxylamin sowie hiervon abgeleitete Salze wie Hydraziniumsulfat und Hydroxylammoniumsulfat, Diethylhydroxylamin, Diisopropylhydroxylamin, wasserlösliche Salze des Hydrochinon, Natriumdithionit, Phenyl-α-Naphthylamin und aromatische Phenole wie tert-Butylbrenzkatechol, oder Phenothiazin.

Die bei der Emulsionspolymerisation verwendete **Wassermenge** liegt im Bereich von 100 bis 900 Gew.-Teilen, bevorzugt im Bereich von 120 bis 500 Gew.-Teilen, besonders bevorzugt im Bereich von 150 bis 400 Gew.-Teilen Wasser bezogen auf 100 Gew.-Teile der Monomermischung.

Bei der Emulsionspolymerisation können der wässrigen Phase Salze zugesetzt werden, um die Viskosität während der Polymerisation zu verringern, zur pH-Wert Einstellung sowie auch zur pH-Wert Pufferung. Hierfür werden üblicherweise Salze einwertiger Metalle in Form von Kalium- und Natriumhydroxid, Natriumsulfat, Natriumcarbonat, Natriumhydrogencarbonat, Lithiumchlorid, Natriumchlorid und Kaliumchlorid eingesetzt. Bevorzugt sind Natrium- und Kaliumhydroxid, Natriumhydrogencarbonat, Lithium-, Natrium- und Kaliumchlorid. Die Mengen dieser Elektrolyte liegen im Bereich 0 bis 1 Gew.-Teile, vorzugsweise 0 bis 0,5 Gew.-Teile bezogen auf 100 Gew.-Teile der Monomermischung.

Die Polymerisation kann entweder diskontinuierlich oder auch kontinuierlich in einer Rührkesselkaskade durchgeführt werden.

Zur Erzielung eines gleichmäßigen Polymerisationsverlaufs wird für den Start der Polymerisation nur ein Teil des Initiatorsystems verwendet und der Rest während der Polymerisation nachdosiert. Üblicherweise startet man die Polymerisation mit 10 bis 80 Gew. %, vorzugsweise 30-50 Gew. % der Gesamtmenge an Initiator. Auch die Nachdosierung einzelner Bestandteile des Initiatorsystems ist möglich.

Will man chemisch einheitliche Produkte herstellen, werden Acrylnitril bzw. Butadien nachdosiert, wenn die Zusammensetzung außerhalb des azeotropen Butadien/Acrylnitril-Verhältnisses liegen soll. Vorzugsweise ist eine Nachdosierung bei NBR-Typen mit Acrylnitrilgehalten von 10 bis 34 Gew.% sowie bei den Typen mit 40 bis 50 Gew.% Acrylnitril (W. Hofmann, "Nitrilkautschuk", Berliner Union, Stuttgart, 1965, Seite 58 ff.) der Fall. Die Nachdosierung erfolgt - wie z.B. in der DD 154 702 angegeben - vorzugsweise computergesteuert auf der Basis eines Rechnerprogramms.

Zur Entfernung nicht umgesetzter Monomere sowie flüchtiger Bestandteile wird der abgestoppte Latex einer Wasserdampfdestillation unterzogen. Hierbei werden Temperaturen im Bereich von 70°C bis 150°C angewandt, wobei bei Temperaturen <100°C der Druck reduziert wird.

Vor der Entfernung der flüchtigen Bestandteile kann eine Nachstabilisierung des Latex mit Emulgator erfolgen. Hierfür verwendet man zweckmäßigerweise die zuvor genannten Emulgatoren in Mengen von 0,1 bis 2,5 Gew. %, vorzugsweise 0,5 bis 2,0 ,Gew. % bezogen auf 100 Gew.-Teile Nitrilkautschuk.

**Latex-Koagulation:**

Vor oder bei der Latexkoagulation können dem Latex ein oder mehrere **Alterungsschutzmittel** zugesetzt werden. Hiefür eigenen sich phenolische, aminische und auch sonstige Alterungsschutzmittel.

Geeignete phenolische Alterungsschutzmittel sind alkylierte Phenole, styrolisiertes Phenol, sterisch gehinderte Phenole wie 2,6-Di-tert.-Butylphenol, 2,6-Di-*tert*-Butyl-*p*-Kresol (BHT), 2,6-Di-tert.-Butyl-4-Ethylphenol, 2,2'-Methylen-bis(6-tert.butyl)-p-kresol, Poly(dicyclopentadien-co-p-kresol), estergruppenhaltige sterisch gehinderte Phenole wie n-Octadecyl-β-(4-hydroxy-3,5-di-tert-butyl-phenyl)-propionat, thioetherhaltige sterisch gehinderte Phenole, 2,2'-Methylen-bis-(4-Methyl-6-*tert*-Butylphenol) (BPH), 2-Methyl-4,6-bis(octylsulfanylmethyl)phenol sowie sterisch gehinderte Thiobisphenole. In besonders geeigneten Ausführungsformen werden auch zwei oder mehr Alterungsschutzmittel zugesetzt, wie z.B. eine Mischung aus 2,2'-Methylen-bis(6-tert.butyl)-p-kresol, Poly(dicyclopentadien-co-p-kresol) und 2-Methyl-4,6-bis(octylsulfanylmethyl)phenol.

Falls eine Verfärbung des Kautschuks ohne Bedeutung ist, werden auch aminische Alterungsschutzmittel z. B. Mischungen aus Diaryl-p-phenylendiaminen (DTPD), octyliertes Diphenylamin (ODPA), Phenyl-α-Naphthylamin (PAN), Phenyl-β-Naphthylamin (PBN), vorzugsweise solche auf Phenylendiaminbasis eingesetzt. Beispiele für Phenylendiamine sind *N*-Isopropyl-*N'*-phenyl-*p*-Phenylendiamin, *N*-1,3-Dimethylbutyl-*N'*-Phenyl-*p*-Phenylendiamin (6PPD), *N*-1,4-Dimethylpentyl-*N'*-phenyl-*p*-Phenylendiamin (7PPD), *N,N'*-bis-1,4-(1,4-Dimethylpentyl)-*p*-Phenylendiamin (77PD) etc.

Zu den sonstigen Alterungsschutzmitteln gehören Phosphite wie Tris(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die Phosphite werden im Allgemeinen in Kombination mit phenolischen Alterungsschutzmitteln eingesetzt. TMQ, MBI und MMBI werden vor allem für NBR-Typen verwendet, die peroxidisch vulkanisiert werden.

Wesentlich für das erfindungsgemäße Verfahren ist, dass die Koagulation des Nitrilkautschuks unter Einsatz mindestens eines Aluminiumsalzes durchgeführt wird.

Üblicherweise wird mindestens ein Aluminiumsalz eingesetzt, bei dem es sich um ein Aluminiumsalz eines ein- oder zweiwertiges Anions handelt, bevorzugt um ein Aluminiumhalogenid, -nitrat, -sulfat, - hydrogencarbonat, -carbonat, -formiat oder -acetat, besonders bevorzugt ein Aluminiumchlorid oder - sulfat.

Gleichermaßen gut geeignet sind beispielsweise Aluminiumchlorid, Aluminiumsulfat, Kaliumaluminiumsulfat (Kaliumalaun), Natriumaluminiumsulfat (Natriumalaun) oder beliebige Mischungen davon.

Das mindestens eine Aluminiumsalz wird in wässriger Lösung eingesetzt, deren Konzentration bezüglich des mindestens einen Aluminiumsalzes üblicherweise 40-70 Gew.%, bevorzugt 40 bis 60 Gew.% beträgt.

Diese Aluminiumsalzlösung wird in einer solchen Menge eingesetzt, dass bezogen auf 100 Gew. Teile Nitrilkautschuk 0,5 - 50 Gew.Teile Aluminiumsalz zum Einsatz kommen, vorzugsweise 0,8 - 40 Gew. %, besonders bevorzugt 1,5 - 20 Gew. % Salz, bezogen auf 100 Gew. Teile Nitrilkautschuk.

Üblicherweise wird die NBR Dispersion zur Aluminiumsalzlösung zugegeben. Es hat sich bewährt, diese Zugabe unter Rühren durchzuführen.

Neben dem mindestens einen Aluminiumsalz können bei der Koagulation auch **Fällhilfsmittel** eingesetzt werden. Als Fällhilfsmittel kommen beispielsweise wasserlöslichen Polymere in Frage. Diese sind nichtionisch, anionisch oder kationisch.

Beispiele für nichtionische polymere Fällhilfsmittel sind modifizierte Cellulose wie Hydroxyalkylcellulose oder Methylcellulose sowie Addukte von Ethylenoxid und Propylenoxid an Verbindungen mit acidem Wasserstoff. Beispiele für Verbindungen mit acidem Wasserstoff sind: Fettsäure, Zucker wie Sorbit, Mono- und Difettsäureglyceride, Phenol, alkylierte Phenole, (Alkyl)phenol/Formaldehyd-Kondensate etc. Die Additionsprodukte von Ethylenoxid und Propylenoxid an diese Verbindungen können statistisch und blockartig aufgebaut sein. Von diesen Produkten sind solche bevorzugt, bei denen die Löslichkeit mit zunehmender Temperatur abnimmt. Charakteristische Trübungstemperaturen liegen im Bereich 0 bis 100°C, insbesondere im Bereich von 20 bis 70°C.

Beispiele für anionische polymere Fällhilfsmittel sind die Homo- und Copolymeren von (Meth)acrylsäure, Maleinsäure, Maleinsäureanydrid etc. Bevorzugt ist das Na-Salz der Polyacrylsäure.

Kationische polymere Fällhilfsmittel basieren üblicherweise auf Polyaminen sowie auf Homo- und Copolymeren des (Meth)acrylamids. Bevorzugt sind Polymethacrylamide und Polyamine, insbesondere auf Basis Epichlorhydrin und Dimethylamin.

Die Mengen an polymeren Fällhilfsmitteln betragen 0,01 bis 5 Gew.-Teilen, bevorzugt 0,05 bis 2,5 Gew.-Teile auf 100 Gew.-Teile Nitrilkautschuk.

Auch der Einsatz anderer Fällhilfsmittel und Salze ist denkbar. Es ist aber anzumerken, dass es ohne Probleme möglich ist, das erfindungsgemäße Verfahren mit dem gewünschten Erfolg in Abwesenheit von zusätzlichen Fällhilfsmitteln und dabei insbesondere in Abwesenheit von $C_1$-$C_4$-Alkylcellulosen, Hydroxyalkylcellulosen, auf Pflanzen zurückgehenden proteinartigen Materialien oder Polysacchariden, wie z.B. Stärke, oder wasserlöslichen Polyaminverbindungen, sowie anderer Koagulationsalze, wie z.B. Calcium- oder Natrium-Salze, durchzuführen.

Der zur Koagulation eingesetzte Latex besitzt zweckmäßigerweise eine **NBR-Feststoffkonzentration** im Bereich von 1 Gew.% bis 40 Gew.%, vorzugsweise im Bereich von 5 Gew.% bis 35 Gew.% und besonders bevorzugt im Bereich von 15 Gew.% bis 30 Gew.%.

Die Latexkoagulation wird im Temperaturbereich von 10 bis 100°C durchgeführt. Vorzugsweise erfolgt die Latexkoagulation bei einer Temperatur von 20 bis 90°C.

Wesentlich für das erfindungsgemäße Verfahren ist, dass sich der pH-Wert während der Koagulation im Bereich von 1 bis 4,5, bevorzugt von 1 bis 4, besonders bevorzugt von 1 bis 3,75 und insbesondere bevorzugt von 1 bis 3,5 befindet bzw. ggf. in dem Fachmann bekannter Art und Weise gehalten wird.

Die Latexkoagulation kann kontinuierlich oder diskontinuierlich erfolgen, bevorzugt wird kontinuierlich gearbeitet.

Bevorzugt wird die Koagulation im erfindungsgemäßen Verfahren ausschließlich unter Einsatz von Aluminiumsalzen durchgeführt. Sofern zusätzlich ein oder mehrere andere Fällsalze eingesetzt werden, die nicht auf Aluminium basieren, so beträgt deren Menge üblicherweise nicht mehr als 10 Gew.-%, bevorzugt nicht mehr als 5 Gew.% und besonders bevorzugt nicht mehr als 3 Gew.%, bezogen auf die Gesamtmenge aller zur Koagulation eingesetzten Salze.

### Wäsche des koagulierten Kautschuks:

Nach der Koagulation liegt der Kautschuk üblicherweise in Form sogenannter Krümel vor. Die Wäsche des koagulierten Kautschuks wird daher auch als "Krümelwäsche" bezeichnet. Für diese Wäsche kann entweder entionisiertes Wasser oder nicht entionisiertes Wasser eingesetzt werden. Die Wäsche wird bei einer Temperatur im Bereich von 15 bis 90°C durchgeführt, bevorzugt bei einer Temperatur im Bereich von 20 bis 80°C. Die Menge des Waschwassers beträgt 0,5 bis 20 Gew.-Teile, bevorzugt 1 bis 10 Gew.-Teile und besonders bevorzugt 1 bis 5 Gew.-Teile bezogen auf 100 Gew.-Teile Kautschuk.

Bevorzugterweise werden die Kautschukkrümel einer mehrstufigen Wäsche unterworfen, wobei die Kautschukkrümel zwischen den einzelnen Waschstufen teilweise entwässert werden. Die Restfeuchten der Krümel zwischen den einzelnen Waschstufen liegen im Bereich von 5 bis 50 Gew.%, vorzugsweise im Bereich von 7 bis 25 Gew. %. Die Zahl der Waschstufen liegt üblicherweise bei 1 bis 7, vorzugsweise bei 1 bis 3. Die Wäsche wird diskontinuierlich oder kontinuierlich durchgeführt. Vorzugsweise verwendet man ein mehrstufiges, kontinuierliches Verfahren, wobei für den schonenden Umgang mit Wasser eine Gegenstromwäsche bevorzugt ist.

Wesentlich für das erfindungsgemäße Verfahren ist, dass die Wäsche des koagulierten Nitrilkautschuks bei einem pH Wert im Bereich von 6 bis 12, bevorzugt von 6,25 bis 11, besonders bevorzugt von 6,5 bis 10,5 und insbesondere von 6,75 bis 10,5 durchgeführt wird.

### Wasserentfernung und Trocknung:

Nach Abschluss der Wäsche hat es sich bewährt, die Nitrilkautschuk-Krümel zu entwässern. Die Trocknung des vorentwässerten Kautschuks erfolgt in einem Trockner, geeignet sind beispielsweise Fließbetttrockner oder Plattentrockner. Die Temperaturen bei der Trocknung liegen bei 80 bis 150°C. Bevorzugt ist eine Trocknung mit Temperaturprogramm, wobei gegen Ende des Trockenprozesses die Temperatur abgesenkt wird.

**Gegenstand der Erfindung** ist daher auch die Verwendung der erfindungsgemäßen Nitrilkautschuke zur Herstellung von vulkanisierbaren Mischungen enthaltend mindestens einen erfindungsgemäßen Nitrilkautschuk und mindestens einen Vernetzer. Optional können ein oder mehrere weitere Additive zugegen sein.

Die Herstellung dieser vulkanisierbaren Mischungen erfolgt durch Mischen mindestens eines erfindungsgemäßen Nitrilkautschuks mit mindestens einem Vernetzer. Gegebenenenfalls werden zusätzlich ein oder mehrere weitere Additive verwendet.

Als **Vernetzer** kommen beispielsweise peroxidische Vernetzer in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcylohexan, tert-Butylperbenzoat, 2,2 Bis(t-butylperoxy) buten, 4,4-di-tert.Butyl peroxynonylvalerat, Dicumylperoxid, 2,5-Dimethyl-2,5-di(t-butylperoxy)-hexan, tert-Butylcumylperoxid, 1,3-Bis(t-butylperoxy isopropyl)-benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropan-tri(meth)acrylat, Triallyltrimellithat, Ethylenglycoldimethacrylat, Butandioldimethacrylat, Trimethylolpropantrimethacrylat, Zn-diacrylat, Zn-dimethacrylat, 1,2-Polybutadien oder N,N'-m-phenylendimaleinimid geeignet.

Die Gesamtmenge des oder der Vernetzer liegt üblicherweise im Bereich von 1 bis 20 Gew.-Teile, bevorzugt im Bereich von 1,5 bis 15 Gew.-Teilen und besonders bevorzugt im Bereich von 2 bis Gew.-Teilen, bezogen auf 100 Gew.-Teile des Nitrilkautschuks.

Als Vernetzer können auch Schwefel in elementarer löslicher oder unlöslicher Form oder Schwefelspender eingesetzt werden.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der erfindungsgemäßen Nitrilkautschuke ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Umgekehrt kann die Vernetzung der erfindungsgemäßen Nitrilkautschuke aber auch nur in Gegenwart der oben genannten Zusätze erfolgen, d.h. ohne Zusatz von elementarem Schwefel oder Schwefelspendern.

Als Zusätze, mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als Dithiocarbamate können beispielsweise eingesetzt werden: Ammoniumdimethyldithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyldithio-carbamat (ZDBC), Zinkethylphenyldithiocarbamat (ZEPC), Zinkdibenzyldithiocarbamat (ZBEC), Zinkpentamethylendithiocarbamat (Z5MC), Tellurdiethyldithio-carbamat, Nickeldibutyldithiocarbamat, Nickeldimethyldithiocarbamat und Zinkdiisononyldithio-carbamat.

Als Thiurame können zum Beispiel eingesetzt werden: Tetramethylthiuramdisulfid (TMTD), Tetramethylthiurammonosulfid (TMTM), Dimethyldiphenylthiuramdisulfid, Tetrabenzylthiuramdisulfid, Dipentamethylenthiuramtetrasulfid und Tetraethylthiuramdisulfid (TETD),

Als Thiazole können zum Beispiel eingesetzt werden: 2-Mercaptobenzothiazol (MBT), Dibenzthiazyldisulfid (MBTS), Zinkmercaptobenzothiazol (ZMBT) und Kupfer-2-mercaptobenzo-thiazol.

Als Sulfenamidderivate können zum Beispiel eingesetzt werden: N-Cyclohexyl-2-benzothiazylsulfenamid (CBS), N-tert.-Butyl-2-benzthiazylsulfenamid (TBBS), N,N'-Dicyclohexyl-2-benzthiazylsulfenamid (DCBS), 2-Morpholinothiobenzthiazol (MBS), N-Oxydiethylenthiocarbamyl-N-tert.butylsulfenamid und Oxydiethylenthiocarbamyl-N-oxyethylensulfenamid.

Als Xanthogenate können zum Beispiel eingesetzt werden: Natriumdibutylxanthogenat, Zinkisopropyldibutylxanthogenat und Zinkdibutylxanthogenat.

Als Guanidinderivate können zum Beispiel eingesetzt werden: Diphenylguanidin (DPG), Di-o-tolylguanidin (DOTG) und o-Tolylbiguanid (OTBG).

Als Dithiophosphate können beispielsweise eingesetzt werden: Zinkdialkydithiophosphate (Kettenlänge der Alkylreste $C_2$ bis $C_{16}$), Kupferdialkyldithiophosphate (Kettenlänge der Alkylreste $C_2$ bis $C_{16}$) und Dithiophoshorylpolysulfid.

Als Caprolactam kann beispielsweise Dithio-bis-caprolactam eingesetzt werden.

Als Thioharnstoffderivate können beispielsweise N,N'-Diphenylthioharnstoff (DPTU), Diethylthioharnstoff (DETU) und Ethylenthioharnstoff (ETU) eingesetzt werden.

Ebenso als Zusätze geeignet sind beispielsweise: Zinkdiamindiisocyanat, Hexamethylentetramin, 1,3-Bis(citraconimidomethyl)benzol sowie zyklische Disulfane.

Die genannten Zusätze als auch die Vernetzungsmittel können sowohl einzeln als auch in Mischungen eingesetzt werden. Bevorzugt werden folgende Substanzen für die Vernetzung der Nitrilkautschuke eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkyldithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithio-bis-caprolactam.

Die Vernetzungsmittel und zuvor genannten Zusätze können jeweils in Mengen von ca. 0,05 bis 10 Gew.Teilen, vorzugsweise 0,1 bis 8 Gew.Teilen, insbesondere 0,5 bis 5 Gew.Teilen (Einzeldosierung, jeweils bezogen auf die Wirksubstanz) bezogen auf 100 Gew.Teile des Nitrilkautschuks eingesetzt werden.

Bei der erfindungsgemäßen Schwefelvernetzung ist es gegebenenfalls auch sinnvoll, zusätzlich zu den Vernetzungsmitteln und oben genannten Zusätzen auch weitere anorganische bzw. organische Substanzen mit zu verwenden, beispielsweise: Zinkoxid, Zinkcarbonat, Bleioxid, Magnesiumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Daneben können auch Anvulkanisationsverzögerer eingesetzt werden. Hierzu gehören Cyclohexylthiophthalimid (CTP), N,N' Dinitrosopentamethlyentetramin (DNPT), Phthalsäureanhydrid (PTA) und Diphenylnitrosamin. Bevorzugt ist Cyclohexylthiophthalimid (CTP).

Neben der Zugabe des oder der Vernetzer kann der erfindungsgemäße Nitrilkautschuk auch mit weiteren üblichen Kautschukadditiven gemischt werden.

Diese schließen beispielsweise die typischen und dem Fachmann hinlänglich bekannten Substanzen wie Füllstoffe, Füllstoffaktivatoren, Ozonschutzmittel, Alterungsschutzmittel, Antioxidationsmittel, Verarbeitungshilfsmittel, Extenderöle, Weichmacher, Verstärkungsmaterialien und Formtrennmittel ein.

Als Füllstoffe können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes ,Teflon (letzteres bevorzugt in Pulverform),oder Silikate eingesetzt werden. Die Menge an Füllstoffen liegt üblicherweise im Bereich von 1-200 Gew.Teilen, bevorzugt 1-180 Gew.Teilen, besonders bevorzugt 1 bis 150 Gew.Teilen bezogen auf 100 Gew.Teile des Nitrilkautschuks.

Als Füllstoffaktivatoren kommen insbesondere organische Silane, wie beispielsweise Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar. Die Menge an Füllstoffaktivatoren beträgt üblicherweise 0 bis 10 Gew.Teile, bezogen auf 100 Gew.Teile des Nitrilkautschuks.

Als **Alterungsschutzmittel** können den vulkanisierbaren Mischungen diejenigen zugesetzt werden, die bereits im Zusammenhang mit der Latexkoagulation in dieser Anmeldung beschrieben werden. Sie werden üblicherweise in Mengen von 0 bis 5 Gew.Teilen, bevorzugt 0,5 bis Gew.Teilen, bezogen auf 100 Gew.Teile des Nitrilkautschuks eingesetzt.

Als **Formtrennmittel** kommen beispielsweise in Betracht: Gesättigte und teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von 0 bis 10 Gew.Teilen, bevorzugt von 0,5 bis 5 Gew.Teilen, bezogen auf 100 Gew.Teile des Nitrilkautschuks eingesetzt.

Auch die Verstärkung mit Festigkeitsträgern (Fasern) aus Glas gemäß der Lehre von US-A-4,826,721 ist möglich, sowie die Verstärkung durch Corde, Gewebe, Fasern aus aliphatischen und aromatischen Polyamiden (Nylon®, Aramid®), Polyestern und Naturfaserprodukten.

**Gegenstand der Erfindung** ist ferner ein Verfahren zur Herstellung von Formteilen auf Basis mindestens eines erfindungsgemäßen Nitrilkautschuks, welches dadurch gekennzeichnet ist, dass man die zuvor beschriebene vulkanisierbare Mischung in einem Formgebungsverfahren, bevorzugt unter Anwendung eines Spritzgussverfahrens, vulkanisiert.

**Gegenstand der Erfindung** ist somit ebenso das spezielle Formteil, welches erhältlich ist durch das vorgenannte Vulkanisationsverfahren.

Durch dieses Verfahren können eine Vielzahl von Formteilen hergestellt werden, so z.B. eine Dichtung, eine Kappe, einen Schlauch oder eine Membran. Insbesondere eignen sich die erfindungsgemäßen Aluminium gefällten Nitrilkautschuke zur Herstellung eines Servolenkschlauchs, von textilverstärkten Schläuchen, eines Hydraulik- oder Kraftstoffschlauchs, von Pumpstatoren, einer Flachdichtung, einer Großflächendichtung, von gummiertem Gewebe, eines Thermoisolierschlauchs (mit und ohne PVC-Zusatz), eines Ölkühlerschlauchs, von flexiblen Kraftstoffbehältern oder einer Pumpenmembran.

**Metathese und Hydrierung von Nitrilkautschuken:**

Es ist auch möglich, dass sich an die Herstellung der Nitrilkautschuke (i) eine Metathese-Reaktion zur Reduktion des Molekulargewichts des Nitrilkautschuks oder (ii) eine Metathese-Reaktion und eine nachfolgende Hydrierung oder (iii) nur eine Hydrierung anschließt. Diese Metathese- bzw. Hydrierungsreaktionen sind bei dem Fachmann hinlänglich bekannt und in der Literatur beschrieben. Die Metathese ist beispielsweise aus WO-A-02/100941 sowie der WO-A-02/100905 bekannt und kann zum Molekulargewichtsabbau eingesetzt werden.

Die Hydrierung kann unter Einsatz homogener oder heterogener Hydrierkatalysatoren durchgeführt werden. Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe **z.B.**US-A-3,700,637**, DE-A-25 39 132**, EP-A- 0 134 023**, DE-OS- 35 41 689**, DE-OS- 35 40 918**, EP-A-0 298 386**, DE-OS- 35 29 252**, DE-OS- 34 33 392**, US-A-4,464,515 **und** US-A-4,503,196).

Geeignete Katalysatoren und Lösungsmittel für eine Hydrierung in homogener Phase werden im Folgenden beschrieben und sind auch aus DE-A-25 39 132 und der EP-A-0 471 250 bekannt. Die selektive Hydrierung kann beispielsweise in Gegenwart eines Rhodium- oder Ruthenium-haltigen Katalysators erreicht werden. Einsetzbar ist beispielsweise ein Katalysator der allgemeinen Formel

$$(R^1{}_mB)_1\ M\ X_n,$$

worin M Ruthenium oder Rhodium ist, $R^1$ gleich oder verschieden sind und eine $C_1$-$C_8$ Alkylgruppe, eine $C_4$-$C_8$ Cycloalkylgruppe, eine $C_6$-$C_{15}$ Aryl-Gruppe oder eine $C_7$-$C_{15}$ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel $(C_6H_5)_3P)_4RhH$ und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel $R^1{}_mB$ ist, wobei $R^1$, m und B die zuvor für den Katalysator genannten Bedeutungen besitzen. Bevorzugt ist m gleich 3, B gleich Phosphor und die Reste $R^1$ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkylmonocycloalkyl, Dicycloalkyl-monoaryl oder Dicyclalkyl-monoaryl-Resten.

Beispiele von Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodium-haltigen Katalysators zum Co-Katalysator im Bereich von 1:3 bis 1:55, besonders bevorzugt im Bereich von 1:5 bis 1:45, bezogen auf 100 Gew.Teile des zu hydrierenden Nitrilkautschuks werden vorzugsweise 0,1 bis 33 Gewichtsteile des Co-Katalysators, bevorzugt 0,5 bis 20 und ganz besonders bevorzugt 1 bis 5 Gew.-Teile, insbesondere mehr als 2 aber weniger als 5 Gew.-eile Co-Katalysator bezogen auf 100 Gew.Teile des zu hydrierenden Nitrilkautschuks eingesetzt.

Die praktische Durchführung der Hydrierung ist dem Fachmann aus US-A-6,683,136 bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100%, verstanden.

Bei Einsatz heterogener Katalysatoren handelt es sich üblicherweise um geträgerte Katalysatoren auf der Basis von Palladium, die z.B. auf Kohle, Kieselsäure, Calciumcarbonat oder Bariumsulfat geträgert sind.

## BEISPIELE:

### I Analytik

Der Stickstoffgehalt zur Bestimmung des **Acrylnitrilgehalts** (ACN-Gehalt) wird in den Nitrilkautschuken gemäß DIN 53 625 nach Kjeldahl bestimmt. Aufgrund des Gehalts an polaren Comonomeren sind die Nitrilkautschuke üblicherweise in Methylethylketon bei 20°C > 85 Gew. % löslich.

Die Bestimmung der Werte für die **Mooney-Viskosität** (ML 1+4@100°C) erfolgt jeweils mittels eines Scherscheibenviskosimeters nach DIN 53523/3 bzw. ASTM D 1646 bei 100°C. Eingesetzt werden unkalandrierte Proben ("unmassed").

Die getrockneten NBR-Kautschuke wurden durch die Mooney-Viskosität vor und nach Heißluftlagerung für 48 Stunden bei 100°C charakterisiert, d.h. die Bestimmung der Mooney-Viskosität erfolgte einmal direkt nach der Trocknung (d.h. vor der Heißluftlagerung) sowie anschließend nach 48-stündiger Heißluftalterung bei 100°C.

Zur weiteren Charakterisierung wurde die Farbe des gealterten Kautschuks bewertet. Die Farbbewertung der gealterten Kautschukproben erfolgte auf einer Skala von 1-10, wobei 1 der Farbe des ungealterten Kautschuks und 10 einer kompletten Schwarzfärbung entsprach.

Die Bestimmung des **Aluminium-Gehalts** erfolgte, indem 0,5 g der Nitrilkautschuke durch trockene Veraschung bei 550°C im Platintiegel mit anschließendem Lösen der Asche in Salzsäure aufgeschlossen wurden. Nach geeigneter Verdünnung der Aufschlusslösung mit deionisiertem Wasser wurde der Aluminium-Gehalt durch ICP-OES (inductively coupled plasma - optical emission spectrometry) bei einer Wellenlänge von 309,271nm gegen mit Säurematrix angepasste Kalibrierlösungen bestimmt. Je nach Konzentration der Elemente in der Aufschlusslösung bzw. Empfindlichkeit des verwendeten Messgeräts wurden die Konzentrationen der Probelösungen für die jeweils verwendeten Wellenlängen an den linearen Bereich der Kalibrierung angepasst (B. Welz "Atomic Absorption Spectrometry", 2nd Ed., Verlag Chemie, Weinheim 1985)

Der **Aluminiumindex E,** angegeben in [ppm/MU] ergibt sich aus Aluminiumgehalt in ppm pro Mooney-Einheit bezogen auf den Nitrilkautschuk.

Die Scorchsicherheit kann über das Anvulkanisationsverhalten und deren Anvulkanisationszeit $t_5$ nach DIN53523 gemessen werden. Hierbei beschreibt die **Anvulkanisationszeit $t_5$** die Zeit in Minuten vom Beginn der Messung bis zum Anstieg der Mooney-Viskosität um 5 Mooney Einheiten über das Viskositätsminimum bei der angegebenen Temperatur.

## II Herstellung der Nitrilkautschuk-Latices für die Beispiele A1 - A18

Die Polymerisation erfolgte diskontinuierlich in einem Autoklaven mit Rührwerk. Bei den Autoklavenansätzen wurden jeweils die in **Tabelle 1** angegebene Monomermischung, Wasser sowie EDTA in einer äquimolaren Menge bezogen auf das Fe-II verwendet. Ein Teil der Wassermenge wurde zusammen mit dem Emulgator im Autoklaven vorgelegt und mit einem Stickstoffstrom gespült. Danach wurden die entstabilisierten Monomeren und die in Tabelle 1 angegebenen Mengen des Molekulargewichtsreglers zugegeben und der Reaktor verschlossen. Nach der Thermostatisierung des Reaktorinhalts wurden die Polymerisationen durch die Zugabe wässriger Lösungen von Eisen(II)salzen (in Form von Prämix-Lösungen) und von para-Menthanhydroperoxid (Trigonox® NT50) gestartet.
Die Prämix-Lösung enthielt 0,986 g Fe(II)SO$_4$ * 7 H$_2$O und 2,0 g Rongalit® C auf 400g Wasser.

Der Polymerisationsverlauf wurde durch gravimetrische Umsatzbestimmungen verfolgt. Bei Erreichen der in **Tabelle 1** angegebenen Umsätze wurde die Polymerisation durch Zugabe einer wässrigen Lösung von Diethylhydroxylamin abgestoppt. Nicht umgesetzte Monomere wurden mittels Wasserdampfdestillation entfernt.

**Tabelle 1: Rezeptur der Emulsionspolymerisation zur Herstellung der NBR Latices A1-A18**

| Nitrilkautschuk | Latex für Beispiele A1-A12 | Latex für Beispiele A13 -A14 | Latex für Beispiele A15 -A16 | Latex für Beispiele A17 -A18 |
|---|---|---|---|---|
| Butadien | 44.2 | 73.9 | 37.0 | 67.5 |
| Acrylnitril | 55.8 | 26.1 | 63.0 | 32.5 |
| Gesamt-Wassermenge | 220 | 170 | 200 | 200 |
| Fettsäure | | 2.0 | | |
| Ölsäure | 1.4 | | 1.4 | 1.4 |
| Harzsäure [1] | 0.6 | | 0.6 | 0.6 |
| AOS [2] | 0.4 | | 0.4 | 0.4 |
| Tert-TDM[3] | 0.6 | 0.25 | 0.61 | 0.46 |
| Polymerisationstemperatur [°C] | 13,0±3 | 13,0±3 | 13,0±3 | 13,0±3 |
| Polymerisationsumsatz [%] | 73 | 75 | 68 | 75 |
| Polymerisationszeit [h] | 7 | 17 | 8.3 | 8.3 |

1) Na Salz der disproportionierten Harzsäure, CAS 61790-51-0
2) AOS: Natrium $\alpha$ Olefin sulfonat
3) tert-TDM: tert-Dodecylmercaptan

## III Aluminium Fällung von NBR-Kautschuken, Beispiele A1 - A12

Vor der Koagulation des jeweiligen NBR-Latex wurde dieser jeweils mit einer 50%igen Dispersion von Vulkanox® BKF (0,3 Gew. % Vulkanox® BKF bezogen auf NBR-Feststoff) versetzt. Es wird eine abgestoppte wässrige NBR-Latexdispersion verwendet, die einen NBR-Feststoffgehalt von 18 Gew.% besitzt und wobei der Polymeranteil im NBR-Latex einen Gehalt von 44 Gew.% basierend auf dem Monomer Acrylnitril und 56 Gew.% basierend auf dem Monomer Butadien aufweist. Die NBR-Dispersion wird langsam zu einer Aluminiumsulfatlösung (T=70 °C) bei dem in der Tabelle angegebenen pH Wert gegeben, und kräftig gerührt. Die Konzentration der Aluminiumsulfatlösungen wird so gewählt, dass homogene Krümel des NBR-Kautschuks erhalten werden. Die auf den NBR-Kautschuk bezogenen Mengen Aluminiumsulfatlösungen liegen bei 9 +/- 1 phr und sind in **Tabelle 2 bzw. 3** angegeben. Der erhaltene Rohkautschuk wird mit Wasser (T=60 °C) bei dem in **Tabelle 2 bzw. 3** angegebenen pH Wert gewaschen und bei 60 °C 16 Stunden in einem Vakuumofen getrocknet, so dass die Restfeuchte <0.6% beträgt.

**Tabelle 2: Aluminium Fällung von Nitrilkautschuk bei verschiedenen pH Werten (Beispiele A1 bis A6; erfindungsgemäße Beispiele sind mit "*" gekennzeichnet)**

| Beispiel | | | A1 | A2* | A3* | A4 | A5 | A6 |
|---|---|---|---|---|---|---|---|---|
| Koagulation | Temperatur | °C | 70 | 70 | 70 | 70 | 70 | 70 |
| | **pH** | | **3,0** | **3,0** | **3,0** | **5,0** | **5,0** | **5,0** |
| | Fällsalz | | $Al_2(SO_4)_3$ | | | | | |
| | Menge Fällsalz | phr | 9 | 9 | 9 | 9 | 9 | 9 |
| Wäsche | Temperatur | °C | 60 | 60 | 60 | 60 | 60 | 60 |
| | **pH** | | **5,1** | **6,9** | **10,0** | **4,8** | **6,8** | **9,9** |
| Ausprüfung | | | | | | | | |
| Ionengehalt | Al | ppm | 1550 | 1640 | 1440 | 14550 | 14750 | 13250 |
| | | | | | | | | |
| Molekulargwichte | GPC | Mn | - | 70922 | - | - | 71239 | - |
| | | Mw | - | 189329 | - | - | 187693 | - |
| Polydispersitätsindex (PDI = Mw/Mn) | | PDI | - | 2,7 | - | - | 2,6 | - |
| | | | | | | | | |
| Mooney-Viskosität | | MU | 44 | 47 | 42 | 64 | 64 | 67 |
| Aluminiumindex E | | ppm/MU | 35,2 | 34,9 | 34,3 | 227,3 | 230,5 | 197,8 |
| Ausprüfung nach Alterung 48h/110°C | | | | | | | | |
| Mooney-Viskosität | | MU | 47 | 49 | 46 | 63 | 63 | 65 |
| Farbbewertung | | | 6 | 4 | 3 | 2 | 2 | 3 |

**Tabelle 3: Aluminium Fällung von Nitrilkautschuk bei verschiedenen pH Werten (Beispiele A7 bis A12; alles Vergleichsbeispiele)**

| Beispiel | | | A7 | A8 | A9 | A10 | A11 | A12 |
|---|---|---|---|---|---|---|---|---|
| Koagulation | Temperatur | °C | 70 | 70 | 70 | 70 | 70 | 70 |
| | pH | | **7,0** | **7,0** | **7,0** | **10,0** | **10,0** | **10,0** |
| | Fällsalz | | $Al_2(SO_4)_3$ | | | | | |
| | Menge Fällsalz | phr | 9 | 9 | 9 | 11 | 11 | 11 |
| Wäsche | Temperatur | °C | 60 | 60 | 60 | 60 | 60 | 60 |
| | pH | | **5,1** | **6,9** | **9,9** | **5,2** | **7,0** | **10,0** |
| Ausprüfung | | | | | | | | |
| Ionengehalt | Al | ppm | 15100 | 14900 | 10800 | 10100 | 6300 | 5700 |
| | | | | | | | | |
| Molekulargwichte | GPC | Mn | - | 67906 | - | - | 73191 | - |
| | | Mw | - | 189077 | - | - | 190062 | - |
| Polydispersitätsindex (PDI = Mw/Mn) | | PDI | - | 2,8 | - | - | 2,6 | - |

(fortgesetzt)

| Beispiel | | | A7 | A8 | A9 | A10 | A11 | A12 |
|---|---|---|---|---|---|---|---|---|
| | | | | | | | | |
| **Mooney-Viskosität** | | MU | **63** | **66** | **67** | **59** | **59** | **58** |
| **Aluminiumindex E** | | ppm/MU | 239,7 | 225,8 | 161,2 | 171.2 | 106,8 | 98,3 |
| **Alterung 48h/110°C** | | | | | | | | |
| **Mooney-Viskosität** | | MU | 62 | 64 | 62 | 60 | 56 | 57 |
| **Farbbewertung** | | | 2 | 2 | 3 | 7 | 9 | 10 |

Wie erwartet zeigen alle Aluminium gefällten Proben dasselbe Molekulargewicht in der GPC Analyse. Bei den Mooney Viskositäten werden jedoch Werte zwischen erfindungsgemäßen Beispielen und Vergleichsbeispielen gemessen, die sich um bis zu 20 MU unterscheiden. Dies muss mutmaßlich auf die Wäsche und das Nicht-Entfernen der Aluminiumsalze zurückzuführen sein, die in grossen Mengen im Kautschuk verbleiben. Die gemessene Mooney Viskosität zeigt somit eine Kombination des gewünschten viskosen Anteils der Polymere und eines Anteil der nicht gewünschten Salze an, wobei letzterer bei den Vergleichsbeispielen überproportional hoch ist. Den besten Aluminiumindex E, als die geringste Salzfracht pro Mooney-Viskosität, erzielt man nur durch die gezielte Koagulation bei einem sauren pH Wert im Bereich von 1 bis 4,5 und eine nachfolgende Wäsche in einem Bereich von 6 bis 12. Anhand von Vergleichsbeispiel 1 ist erkennbar, dass eine kleine Abweichung im pH Wert der Wäsche von 5,1 jenseits des erfindungsgemäß relevanten Bereichs von 6 bis 12 zu iner substanzielle verschlecherten Farbbewertung für die gealterten Proben führt. Erkennbar ist ferner, dass selbst durch eine höhere Menge an Aluminiumsulfatlösungen (phr) in der Fällung (Beispiel A10-A12 gegenüber A7-A9) die verbleibende Menge an Aluminiumionen im Kautschuk nicht zwangsläufig erhöht wird.

Nach einer Heissluftalterung der Kautschuke zeigen sich große Farbunterschiede zwischen den gealterten Proben. Der geringste Farbunterschied nach Alterung der Kautschuke liegt bei den Beispielen A3-A9 vor, allerdings ist dies insofern irreführend, als dieses scheinbar positive Ergebnis bei diesen Vergleichsbeispielen durch den zu hohen Aluminiumsalzgehalt verursacht wird. Erkennbar ist, dass der Kautschuk nach dem Alterungstest bei zunehmendem Salzgehalt immer heller wird, da die Aluminiumsalze den Kautschuk aufhellen, allerdings unter gleichzeitig substanzieller Einbuße der übrigen Eigenschaften. Den besten Farbeffekt bei gleichzeitig geringst möglicher Salzfracht erzielt man überraschenderweise nur durch eine Koagulation bei einem pH Wert im Bereich von 1 bis 4,5 und einer nachfolgenden Wäsche in einem Bereich von 6 bis 12.

### III Aluminium Fällung von NBR-Kautschuken, Beispiele A13 - A18

Vor der Koagulation des jeweiligen NBR-Latex wurde dieser jeweils mit einer 50%igen Dispersion von Vulkanox® BKF (0,4 Gew. % Vulkanox® BKF bezogen auf NBR-Feststoff) versetzt. Es wird eine abgestoppte wässrige NBR-Latexdispersion verwendet, die einen NBR-Feststoffgehalt von 18,4 Gew.% besitzt und wobei der Polymeranteil im NBR-Latex die in **Tabelle 4** angegebene Mooney Viskosität sowie die ebenfalls in **Tabelle 4** genannten Gehalte basierend auf den Monomeren Acrylnitril und Monomer. Die Dispersion wird langsam zu einer Aluminiumsulfatlösung bei dem in der **Tabelle 4** angegebenen pH Wert und Temperatur gegeben und kräftig gerührt. Die Konzentration der Aluminiumsulfatlösungen wird so gewählt, dass homogene Krümel des NBR-Kautschuks erhalten werden. Die auf den Kautschuk bezogenen Mengen Aluminiumsulfatlösungen sind in **Tabelle 4** angegeben. Der erhaltene Rohkautschuk wird mit Wasser bei dem in der **Tabelle 4** angegebenen pH Wert und Temperatur gewaschen und bei 60 °C 16 Stunden in einem Vakuumofen getrocknet, so dass die Restfeuchte <0.6% beträgt.

**Tabelle 4: Aluminium Fällung von Nitrilkautschuk bei Koagulation im Sauren und Wäsche im Basischen (Beispiele A13 bis A18; alles erfindungsgemäße Beispiele)**

| Beispiel | | | A13* | A14* | A15* | A16* | A17* | A18* |
|---|---|---|---|---|---|---|---|---|
| **Koagulation** | Temperatur | °C | 60 | 60 | 65 | 65 | 60 | 60 |
| | pH | | **3,0** | | | | | |
| | Fällsalz | | $Al_2(SO_4)_3$ | | | | | |
| | Menge Fällsalz | phr | 7 | 7 | 7 | 7 | 6 | 6 |

(fortgesetzt)

| Beispiel | | | A13* | A14* | A15* | A16* | A17* | A18* |
|---|---|---|---|---|---|---|---|---|
| Wäsche | Temperatur | °C | 60 | 60 | 65 | 65 | 60 | 60 |
| | pH | | **7,1** | **10,3** | **7,1** | **9,9** | **7,0** | **10,0** |
| Ausprüfung | | | | | | | | |
| Ionengehalt | Al | ppm | 1096 | 880 | 1626 | 1380 | 1216 | 1137 |
| ACN Gehalt | | % | 28 | 28 | 49 | 49 | 28,5 | 28,5 |
| Mooney-Viskosität | | Mu | **95** | **99** | **61** | **66** | **51** | **53** |
| Aluminiumindex E | | ppm/Mu | 11,5 | 8,9 | 26,7 | 20,9 | 23,8 | 21,5 |
| Alterung 48h/110°C | | | | | | | | |
| Moonev-Viskosität | | Mu | **109** | **97** | **78** | **79** | **81** | **70** |
| Farbbewertung | | | 4 | 4 | 4 | 3 | 4 | 4 |

**Tabelle 4** zeigt, dass man durch Aluminium Fällung bei einem sauren pH Wert von 3 mit anschließender basischer Wäsche im erfindungsgemäß relevanten pH Wert-Bereich von 6 bis 12 Kautschuke erhält, die nur einen geringen Salzgehalt haben, zusätzlich einen niedrigen Aluminiumindex E aufweisen und ferner nach Alterung eine gute Farbstabilität zeigen. Vorteilhaft ist, dass dies sowohl für Nitrilkautschuke mit einem sehr hohen als auch für solche mit einem sehr niedrigen Acrylnitril-Gehalt im Polymer gilt, da letztere besonders empfindlich reagieren.

**IV Herstellung von Vulkanisaten der Nitrilkautschuke V1 - V18**

Aus den Nitrilkautschuken A1 - A18 wurden wie nachstehend beschrieben die Vulkanisate V1 bis V18 hergestellt. Die Bestandteile der vulkanisierbaren Mischungen sind auf 100 Teile Kautschuk bezogen und in **Tabelle 5** angegeben. Die Vulkanisat Nr. in **Tabelle 5** entspricht dabei jeweils dem Nitrilkautschuk mit der gleichen Nummer. Aus Nitrilkautschuk A1 wird Vulkanisat V1 hergestellt, aus Nitrilkautschuk A2 Vulkanisat V2 usw..

Die Mischungen wurden in einem Banbury Mixer nach ISO4658, Abschnitt 5.2.3.3. hergestellt. Hierzu wurden jeweils der Kautschuk und alle in Tabelle 4 genannten Zuschlagstoffe insgesamt 5 Minuten bei einer maximalen Temperatur von bis zu 60 °C gemischt.

**Tabelle 5: Zusammensetzung der vulkanisierbaren Mischungen für Vulkanisate V1 - V18**

| vulkanisierbare Mischung für | | V1-V12 | V13-V14 | V15-V16 | V17-V18 |
|---|---|---|---|---|---|
| Polymer A1 - A18* | | 100 | 100 | 100 | 100 |
| IRB 7 [1] | | 40 | 40 | 40 | 40 |
| EDENOR C 18 98-100 [2] | | 1 | 1 | 1 | 1 |
| SULFUR SPIDER [3] | | 1,54 | 1,54 | 1,54 | 1,54 |
| VULKACIT NZ/EGC [4] | | 0,7 | 0,7 | 0,7 | 0,7 |
| ZINKOXYD AKTIV [5] | | 3 | 3 | 3 | 3 |
| Total | phr | 146,24 | 146,24 | 146,24 | 146,24 |
| Dichte | g/ccm | 1,167 | 1,129 | 1,176 | 1,139 |

1 IRB7 Ruß der Sid Richardson Carbon Co.

2 Edenor C 1898-100 Stearinsäure der Fa. Caldic 3 Sulfur Spider Schwefel (S8) von Krahn Chemie GmbH 4 Vulkacit® NZ/EG-C N-Cyclohexyl-2-benzothiazolsulfenamid (CBS) der Lanxess Deutschland GmbH 5 Zinkoxid Aktiv Zinkoxid der Lanxess Deutschland GmbH

Die erhaltenen Vulkanisate hatten die in **Tabelle 6 bis 8** angegebene Anvulkanisationszeit $t_5$ nach DIN53523 bzw. den angegebenen Mooney Scorch bei 140°C (MS $t_5$/140°C). Erkennbar ist, dass die Polymere mit einem Aluminiumindex E kleiner gleich 35 ppm/MU eine längere Scorchzeit MS $t_5$/140°C besitzen als nicht erfindungsgemäße Proben, d.h. erstere besitzen eine sehr gute Verarbeitungssicherheit, wie sie für Aluminium-gefällte Typen verlangt wird. Aluminium gefällte Typen, die nicht in dem angegebenen Werteberreich sauer gefällt und bei einem basischem pH Wert im angegebenen Werteberreich gewaschen werden, sehr kurze Scorchzeiten, sowie des weiteren hohe Aluminiumgehalte. ("nd" steht in Tablle 7 für "not determined")

**Tabelle 6: Mooney Scorch von Aluminium gefällten Nitrilkautschuken**

| Beispiel | | | V1 | V2* | V3* | V4 | V5 | V6 |
|---|---|---|---|---|---|---|---|---|
| Aluminiumindex E | | ppm/MU | 35,2 | 34,9 | 34,3 | 227,3 | 230,5 | 197,8 |
| Mooney Scorch | MS $t_5$/140°C | min | 17,1 | 17,8 | 17,2 | 16,6 | 16,3 | 13,9 |

**Tabelle 7: Mooney Scorch von Aluminium gefällten Nitrilkautschuken**

| Beispiel | | | V7 | V8 | V9 | V10 | V11 | V12 |
|---|---|---|---|---|---|---|---|---|
| Aluminiumindex E | | ppm/MU | 239,7 | 225,8 | 161,2 | 171.2 | 106,8 | 98,3 |
| Mooney Scorch | MS $t_5$/140°C | min | 16,0 | 15,2 | 12,1 | 11,4 | nd | 8,4 |

**Tabelle 8: Mooney Scorch von Aluminium gefällten Nitrilkautschuken**

| Beispiel | | | V13* | V14* | V15* | V16* | V17* | V18* |
|---|---|---|---|---|---|---|---|---|
| Aluminiumindex E | | ppm/MU | 11,5 | 8,9 | 26,7 | 20,9 | 23,8 | 21,5 |
| Mooney Scorch | MS $t_5$/140°C | min | 9,6 | 9,7 | 13,6 | 14,6 | 13,0 | 12,7 |

**Patentansprüche**

1. **Nitrilkautschuk** enthaltend Wiederholungseinheiten mindestens eines $\alpha,\beta$-ungesättigten Nitril-Monomeren und mindestens eines konjugierten Dien-Monomeren, **dadurch gekennzeichnet, dass** er einen Aluminiumindex E gemäß der allgemeinen Formel (I) von kleiner gleich 35.0 ppm/MU, bezogen auf den Nitrilkautschuk aufweist,

$$E = \frac{[\text{Aluminium}]}{\text{Mooney-Viskosität}} \qquad (I)$$

worin

[Aluminium] den Aluminium Gehalt des Nitrilkautschuks in ppm bedeutet und
Mooney-Viskosität den Wert für die Mooney-Viskosität (ML 1+4 at 100°C) des Nitrilkautschuks angegeben in Mooney Einheiten (MU) darstellt.

2. **Nitrilkautschuk** gemäß Anspruch 1, **dadurch gekennzeichnet, dass** er einen Aluminiumindex E gemäß der allgemeinen Formel (I) im Bereich von 3 ppm/MU bis kleiner gleich 35 ppm/MU, bevorzugt im Bereich von 5 ppm/MU bis kleiner 35ppm/MU und besonders bevorzugt im Bereich von 7 ppm/MU bis kleiner 35 ppm/MU, bezogen auf den Nitrilkautschuk besitzt.

3. **Nitrilkautschuk** gemäß Anspruch 1 oder 2 zusätzlich enthaltend Wiederholungseinheiten eines oder mehrerer weiterer copolymerisierbarer Monomere.

4. Nitrilkautschuk gemäß einem der Ansprüche 1 bis 3, **dadurch gekennzeichnet, dass** es sich um ein Copolymer aus Acrylnitril und 1,3-Butadien handelt.

5. Nitrilkautschuk gemäß einem der Ansprüche 1 bis 4, **dadurch gekennzeichnet, dass** der Anteile des oder der Summe der konjugierten Diene im Bereich von 20 bis 95 Gew.%, bevorzugt im Bereich von 40 bis 90 Gew.%, besonders bevorzugt im Bereich von 60 bis 85 Gew.%, bezogen auf den Nitrilkautschuk, und der Anteil des oder der Summe der $\alpha,\beta$-ungesättigten Nitrile im Bereich von 5 bis 80 Gew.%, bevorzugt von 10 bis 60 Gew.% und besonders bevorzugt von 15 bis 40 Gew.%, bezogen auf den Nitrilkautschuk, liegt, wobei sich die Anteile aller Monomere jeweils zu 100 Gew.% aufsummieren.

6. **Verfahren zur Herstellung von Nitrilkautschuken** gemäß einem der Ansprüche 1 bis 5 durch Emulsionspolymerisation mindestens eines $\alpha,\beta$-ungesättigten Nitril-Monomeren und mindestens eines konjugierten Dien-Monomeren, **dadurch gekennzeichnet, dass**

 (i) der nach der Polymerisation anfallende, den Nitrilkautschuk enthaltende Latex unter Einsatz mindestens eines Aluminiumsalzes koaguliert wird, wobei die Koagulation bei einem pH Wert im Bereich von 1 bis 4,5, bevorzugt von 1 bis 4, besonders bevorzugt von 1 bis 3,75 und insbesondere von 1 bis 3,5 erfolgt und
 (ii) die nachfolgende Wäsche der Nitrilkautschuks bei einem pH Wert im Bereich von 6 bis 12, bevorzugt von 6,25 bis 11, besonders bevorzugt von 6,5 bis 10,5 und insbesondere von 6,75 bis 10,5 durchgeführt wird.

7. **Verfahren zur Herstellung von Nitrilkautschuken** gemäß Anspruch 6, **dadurch gekennzeichnet, dass** die Koagulation des Nitrilkautschuks unter Einsatz mindestens eines Aluminiumsalzes durchgeführt wird, welches ein Aluminiumsalz eines ein- oder zweiwertiges Anions darstellt, bevorzugt ein Aluminium-Halogenid, Nitrat, Sulfat, Hydrogencarbonat, Carbonat, Formiat oder Acetat, besonders bevorzugt ein Aluminium Chlorid oder Sulfat.

8. **Verfahren zur Herstellung von Nitrilkautschuken** gemäß Anspruch 7, **dadurch gekennzeichnet, dass** die Koagulation des Nitrilkautschuks unter Einsatz von Aluminiumchlorid, Aluminiumsulfat, Kaliumaluminiumsulfat (Kaliumalaun), Natriumaluminiumsulfat (Natriumalaun) oder beliebigen Mischungen davon durchgeführt wird.

9. **Verfahren zur Herstellung von Nitrilkautschuken** gemäß einem der Ansprüche 6 bis 8, **dadurch gekennzeichnet, dass** das mindestens eine Aluminiumsalz in Form einer wässrigen Lösung verwendet wird, deren Konzentration 40-70 Gew.%, bevorzugt 40 bis 60 Gew.% beträgt und die in in einer solchen Menge verwendet wird, dass bezogen auf 100 Gew. Teile Nitrilkautschuk 0,5 - 50 Gew.Teile Aluminiumsalz zum Einsatz kommen, vorzugsweise 0,8-40 Gew.%, besonders bevorzugt 1,5 - 20 Gew.% Salz, bezogen auf 100 Gew. Teile Nitrilkautschuk.

10. **Verfahren zur Herstellung von Nitrilkautschuken** gemäß einem der Ansprüche 6 bis 9, **dadurch gekennzeichnet, dass** entweder ausschließlich Aluminiumsalze zur Koagulation in Schritt (i) eingesetzt werden oder aber neben dem mindestens einen Aluminiumsalz zusätzlich ein oder mehrere andere Fällsalze, die nicht auf Aluminium basieren, in einer Menge von nicht mehr als 10 Gew.-%, bevorzugt von nicht mehr als 5 Gew.% und besonders bevorzugt von nicht mehr als 3 Gew.%, bezogen auf die Gesamtmenge aller zur Koagulation eingesetzten Salze eingesetzt werden.

11. **Vulkanisierbare Mischung** enthaltend den Nitrilkautschuk gemäß einem der Ansprüche 1 bis 5 sowie mindestens einen Vernetzer.

12. **Verfahren zur Herstellung der vulkanisierbaren Mischung** gemäß Anspruch 11, **dadurch gekennzeichnet, dass** man den Nitrilkautschuk gemäß einem der Ansprüche 1 bis 5 mit mindestens einem Vernetzer mischt.

13. **Verfahren zur Herstellung von Vulkanisaten,** bevorzugt als Formteilen, **dadurch gekennzeichnet, dass** man die vulkanisierbaren Mischung gemäß Anspruch 11 einer Vulkanisation unterwirft, bevorzugt in einem Formgebungsverfahren und ferner bevorzugt unter Wärmeeinwirkung.

14. **Vulkanisate** erhältlich gemäß dem Verfahren nach Anspruch 13.

15. **Vulkanisate** gemäß Anspruch 14, **dadurch gekennzeichnet, dass** es sich um Formteile handelt, die bevorzugt ausgewählt sind aus Dichtungen, einer Kappen, Schläuchen und Membranen.

**Claims**

1. **Nitrile rubber** containing repeat units of at least one $\alpha,\beta$-unsaturated nitrile monomer and of at least one conjugated diene monomer, **characterized in that** it has an aluminium index E according to the general formula (I) of less than 35.0 ppm/MU, based on the nitrile rubber,

$$E = \frac{[\text{Aluminium}]}{\text{Mooney viscosity}} \qquad (I)$$

in which

[aluminium] is the aluminium content of the nitrile rubber in ppm and
Mooney viscosity is the value of the Mooney viscosity (ML 1+4 at 100°C) of the nitrile rubber, reported in Mooney units (MU).

2. **Nitrile rubber** according to Claim 1, **characterized in that** it has an aluminium index E according to the general formula (I) in the range from 3 ppm/MU to not more than 35 ppm/MU, preferably in the range from 5 ppm/MU to less than 35 ppm/MU and more preferably in the range from 7 ppm/MU to less than 35 ppm/MU, based on the nitrile rubber.

3. **Nitrile rubber** according to Claim 1 or 2, additionally containing repeat units of one or more further copolymerizable monomers.

4. **Nitrile rubber** according to any of Claims 1 to 3, **characterized in that** it is a copolymer of acrylonitrile and 1,3-butadiene.

5. **Nitrile rubber** according to any of Claims 1 to 4, **characterized in that** the proportions of or the sum total of the conjugated dienes is in the range from 20% to 95% by weight, preferably in the range from 40% to 90% by weight, more preferably in the range from 60% to 85% by weight, based on the nitrile rubber, and the proportion of or the sum total of the $\alpha,\beta$-unsaturated nitriles is in the range from 5% to 80% by weight, preferably from 10% to 60% by weight and more preferably from 15% to 40% by weight, based on the nitrile rubber, where the proportions of all the monomers add up to 100% by weight in each case.

6. **Process for producing nitrile rubbers** according to any of Claims 1 to 5 by emulsion polymerization of at least one $\alpha,\beta$-unsaturated nitrile monomer and at least one conjugated diene monomer, **characterized in that**

(i) the latex which contains the nitrile rubber and is obtained after the polymerization is coagulated using at least one aluminium salt, the coagulation being effected at a pH in the range from 1 to 4.5, preferably from 1 to 4, more preferably from 1 to 3.75 and especially from 1 to 3.5, and
(ii) the subsequent wash of the nitrile rubber is conducted at a pH in the range from 6 to 12, preferably from 6.25 to 11, more preferably from 6.5 to 10.5 and especially from 6.75 to 10.5.

7. **Process for producing nitrile rubbers** according to Claim 6, **characterized in that** the coagulation of the nitrile rubber is conducted using at least one aluminium salt which is an aluminium salt of a mono- or divalent anion, preferably an aluminium halide, nitrate, sulphate, hydrogencarbonate, carbonate, formate or acetate, more preferably an aluminium chloride or sulphate.

8. **Process for producing nitrile rubbers** according to Claim 7, **characterized in that** the coagulation of the nitrile rubber is conducted using aluminium chloride, aluminium sulphate, potassium aluminium sulphate (potassium alum), sodium aluminium sulphate (sodium alum) or any desired mixtures thereof.

9. **Process for producing nitrile rubbers** according to any of Claims 6 to 8, **characterized in that** the at least one aluminium salt is used in the form of an aqueous solution which has a concentration of 40%-70% by weight, preferably 40% to 60% by weight, and is used in such an amount that, based on 100 parts by weight of nitrile rubber, 0.5-50 parts by weight of aluminium salt are used, preferably 0.8%-40% by weight, more preferably 1.5%-20% by weight, of salt, based on 100 parts by weight of nitrile rubber.

10. **Process for producing nitrile rubbers** according to any of Claims 6 to 9, **characterized in that** either exclusively aluminium salts are used for coagulation in step (i) or else, as well as the at least one aluminium salt, additionally one or more other, non-aluminium-based precipitation salts are used in an amount of not more than 10% by weight, preferably of not more than 5% by weight and more preferably of not more than 3% by weight, based on the total amount of all the salts used for coagulation.

11. **Vulcanizable mixture** comprising the nitrile rubber according to any of Claims 1 to 5 and at least one crosslinker.

12. **Process for producing the vulcanizable mixture** according to Claim 11, **characterized in that** the nitrile rubber according to any of Claims 1 to 5 is mixed with at least one crosslinker.

13. **Process for producing vulcanizates,** preferably in the form of mouldings, **characterized in that** the vulcanizable mixture according to Claim 11 is subjected to a vulcanization, preferably in a shaping process and further preferably while being heated.

14. **Vulcanizates** obtainable by the process according to Claim 13.

15. **Vulcanizates** according to Claim 14, **characterized in that** they are mouldings preferably selected from seals, caps, hoses and membranes.

**Revendications**

1. Caoutchouc de nitrile contenant des unités de répétition d'au moins un monomère de nitrile $\alpha,\beta$-insaturé et d'au moins un monomère de diène conjugué, **caractérisé en ce qu'**il présente un indice d'aluminium E selon la formule générale (I) inférieur ou égal à 35,0 ppm/MU, par rapport au caoutchouc de nitrile,

$$E = \frac{[\text{aluminium}]}{\text{viscosité de Mooney}} \qquad (I)$$

dans laquelle

[aluminium] signifie la teneur en aluminium du caoutchouc de nitrile en ppm et
viscosité de Mooney représente la valeur de la viscosité de Mooney (ML 1+4 à 100 °C) du caoutchouc de nitrile indiquée en unités de Mooney (MU).

2. Caoutchouc de nitrile selon la revendication 1, **caractérisé en ce qu'**il présente un indice d'aluminium E selon la formule générale (I) dans la plage allant de 3 ppm/MU à 35 ppm/MU ou moins, de préférence dans la plage allant de 5 ppm/MU à moins de 35 ppm/MU et de manière particulièrement préférée dans la plage allant de 7 ppm/MU à moins de 35 ppm/MU, par rapport au caoutchouc de nitrile.

3. Caoutchouc de nitrile selon la revendication 1 ou 2, contenant en outre des unités de répétition d'un ou de plusieurs autres monomères copolymérisables.

4. Caoutchouc de nitrile selon l'une quelconque des revendications 1 à 3, **caractérisé en ce qu'**il s'agit d'un copolymère d'acrylonitrile et de 1,3-butadiène.

5. Caoutchouc de nitrile selon l'une quelconque des revendications 1 à 4, **caractérisé en ce que** la proportion du ou de la somme des diènes conjugués se situe dans la plage allant de 20 à 95 % en poids, de préférence dans la plage allant de 40 à 90 % en poids, de manière particulièrement préférée dans la plage allant de 60 à 85 % en poids, par rapport au caoutchouc de nitrile, et la proportion du ou de la somme des nitriles $\alpha,\beta$-insaturés se situe dans la plage allant de 5 à 80 % en poids, de préférence de 10 à 60 % en poids, et de manière particulièrement préférée de 15 à 40 % en poids, par rapport au caoutchouc de nitrile, la somme des proportions de tous les monomères étant à chaque fois de 100 % en poids.

6. Procédé de fabrication de caoutchoucs de nitrile selon l'une quelconque des revendications 1 à 5 par polymérisation en émulsion d'au moins un monomère de nitrile $\alpha,\beta$-insaturé et d'au moins un monomère de diène conjugué, **caractérisé en ce que**

(i) le latex contenant le caoutchouc de nitrile formé après la polymérisation est coagulé en utilisant au moins un sel d'aluminium, la coagulation ayant lieu à un pH dans la plage allant de 1 à 4,5, de préférence de 1 à 4, de manière particulièrement préférée de 1 à 3,75 et notamment de 1 à 3,5, et

(ii) le lavage ultérieur du caoutchouc de nitrile est réalisé à un pH dans la plage allant de 6 à 12, de préférence de 6,25 à 11, de manière particulièrement préférée de 6,5 à 10,5 et notamment de 6,75 à 10,5.

7. Procédé de fabrication de caoutchoucs de nitrile selon la revendication 6, **caractérisé en ce que** la coagulation du caoutchouc de nitrile est réalisée en utilisant au moins un sel d'aluminium, qui est un sel d'aluminium d'un anion mono- ou bivalent, de préférence un halogénure, nitrate, sulfate, hydrogénocarbonate, carbonate, formiate ou acétate d'aluminium, de manière particulièrement préférée un chlorure ou sulfate d'aluminium.

8. Procédé de fabrication de caoutchoucs de nitrile selon la revendication 7, **caractérisé en ce que** la coagulation du caoutchouc de nitrile est réalisée en utilisant du chlorure d'aluminium, du sulfate d'aluminium, du sulfate de potassium-aluminium (alun de potassium), du sulfate de sodium-aluminium (alun de sodium) ou leurs mélanges quelconques.

9. Procédé de fabrication de caoutchoucs de nitrile selon l'une quelconque des revendications 6 à 8, **caractérisé en ce que** ledit au moins un sel d'aluminium est utilisé sous la forme d'une solution aqueuse, dont la concentration est de 40 à 70 % en poids, de préférence de 40 à 60 % en poids, et qui est utilisée en une quantité telle que 0,5 à 50 parties en poids de sel d'aluminium soient utilisées pour 100 parties en poids de caoutchouc de nitrile, de préférence 0,8 à 40 % en poids, de manière particulièrement préférée 1,5 à 20 % en poids de sel, par rapport à 100 parties en poids de caoutchouc de nitrile.

10. Procédé de fabrication de caoutchoucs de nitrile selon l'une quelconque des revendications 6 à 9, **caractérisé en ce que** soit des sels d'aluminium sont utilisés exclusivement pour la coagulation à l'étape (i), soit un ou plusieurs autres sels de précipitation, non à base d'aluminium, sont utilisés en plus dudit au moins un sel d'aluminium, en une quantité inférieure ou égale à 10 % en poids, de préférence inférieure ou égale à 5 % en poids et de manière particulièrement préférée inférieure ou égale à 3 % en poids, par rapport à la quantité totale de tous les sels utilisés pour la coagulation.

11. Mélange vulcanisable contenant le caoutchouc de nitrile selon l'une quelconque des revendications 1 à 5, ainsi qu'au moins un agent de réticulation.

12. Procédé de fabrication du mélange vulcanisable selon la revendication 11, **caractérisé en ce que** le caoutchouc de nitrile selon l'une quelconque des revendications 1 à 5 est mélangé avec au moins un agent de réticulation.

13. Procédé de fabrication de vulcanisats, de préférence sous la forme de pièces moulées, **caractérisé en ce que** le mélange vulcanisable selon la revendication 11 est soumis à une vulcanisation, de préférence dans un procédé de façonnage et de manière davantage préférée sous l'effet de chaleur.

14. Vulcanisats pouvant être obtenus par le procédé selon la revendication 13.

15. Vulcanisats selon la revendication 14, **caractérisés en ce qu'**il s'agit de pièces moulées, qui sont de préférence choisies parmi les joints, les couvercles, les tuyaux et les membranes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007024008 A
- JP 2006063247 A
- JP 5078427 A
- JP 46039477 A
- DE 2221094 A
- DD 154702
- EP 0692496 A
- EP 0779301 A
- EP 0779300 A
- US 4826721 A
- WO 02100942 A
- WO 02100905 A
- US 3700637 A
- DE 2539132 A
- EP 0134023 A
- DE 3541689 A
- DE 3540918 A
- EP 0298386 A
- DE 3529252 A
- DE 3433392 A
- US 4464515 A
- US 4503196 A
- EP 0471250 A
- US 4631315 A
- US 6683136 A

**In der Beschreibung aufgeführte Nicht-Patentliteratur**

- **KOLLOID-Z.** *Calciumchlorid oder Magnesiumchlorid,* 1957, vol. 154, 154
- **HOUBEN-WEYL.** *Methoden der Org. Chemie, Makromolekulare Stoffe,* 1961, vol. 1, 484
- **HOUBEN-WEYL.** *Methoden der Org. Chemie, Makromolekulare Stoffe,* 1961, vol. 1, 479
- *Angew. Makromol. Chem.,* 1986, vol. 145-146, 161-179
- **B. WELZ.** Atomic Absorption Spectrometry. Verlag Chemie, 1985, 395
- Ullmann's Encyclopedia of Industrial Chemistry. vol. 31, 345-355
- Ullmann's Encyclopedia of Industrial Chemistry. vol. 13, 75-108
- **B. WELZ.** Atomic Absorption Spectrometry. Verlag Chemie, 1985